# EUROPEAN PATENT SPECIFICATION

(11) **EP 0 703 851 B1**
(45) Date of publication and mention of the grant of the patent: **24.03.1999**
(21) Application number: 94920694.0
(22) Date of filing: 31.05.1994
(51) Int. Cl.: B24D 11/00, B24D 18/00, B29C 41/04, B29C 41/20

(54) **ABRASIVE BELTS WITH AN ENDLESS, FLEXIBLE, SEAMLESS BACKING AND METHODS OF PREPARATION**
SCHLEIFBAND MIT EINEM ENDLOSEN, BIEGSAMEN, NAHTLOSEN TRÄGER UND HERSTELLUNGSVERFAHREN
BANDES ABRASIVES A SUPPORT SANS SOUDURE, SOUPLE, SANS FIN ET LEURS PROCEDES DE PREPARATION

(30) Priority: 17.06.1993 US 79364; 13.05.1994 US 242295
(43) Date of publication of application: 03.04.1996
(73) Proprietor: MINNESOTA MINING AND MANUFACTURING COMPANY, St. Paul, Minnesota 55133-3427 (US)
(72) Inventor: SCHNEIDER, Michael, J., Saint Paul, MN 55133-3427 (US); KRISHNAN, Subramanian, Saint Paul, MN 55133-3427 (US)
(74) Representative: VOSSIUS & PARTNER
(86) International application number: US9406095
(87) International publication number: WO9500294

(56) References cited:
- EP-A- 0 095 055
- EP-A- 0 349 466
- EP-A- 0 533 482
- US-A- 4 018 574
- US-A- 4 373 933
- US-A- 4 394 340

## Description

The present invention relates to a method of making abrasive articles, and more specifically, to a method for preparing a flexible, endless, seamless substrate containing an organic binder material and a fibrous material embedded therein. Additionally, this invention relates to methods of preparing flexible, endless, seamless abrasive belts.

Coated abrasive articles generally contain an abrasive material, typically in the form of abrasive grains, bonded to a backing by means of one or more adhesive layers. Such articles usually take the form of sheets, discs, belts, bands, and the like, which can be adapted to be mounted on pulleys, wheels, or drums. Abrasive articles can be used for sanding, grinding or polishing various surfaces of, for example, steel and other metals, wood, wood-like laminates, plastic, fiberglass, leather, or ceramics.

The backings or substrates used in coated abrasive articles are typically made of paper, polymeric materials, cloth, non-woven materials, vulcanized rubber, or combinations of these materials. Many of these materials provide unacceptable backings for certain applications because they are not of sufficient strength, flexibility, or impact-resistance. In addition, some of these materials age unacceptably rapidly. Furthermore, some of the materials are sensitive to liquids that are used as coolants and cutting fluids. Accordingly, early failure and poor functioning can occur in certain applications. In a typical manufacturing process, a coated abrasive article is made in a continuous web form and then converted into a desired construction, such as a sheet, disc, belt or the like. One of the most useful constructions of a coated abrasive article is an endless coated abrasive belt, i.e., a continuous loop of coated abrasive material. In order to form such an endless belt, the web form is typically cut into an elongate strip of a desired width and length. The ends of the elongate strip are then joined together to create a "joint" or a "splice".

Two types of splices are common in endless abrasive belts. These are the "lap" splice and the "butt" splice. For the lap splice, the ends of the elongate strip are doubled such that the top surface with the abrasive coating and the bottom surface of the backing fit together without a significant change in the overall thickness of the belt. This is typically done by removing abrasive grains from the abrasive surface of the strip at one of the ends, and by removing part of the material from the backing of the elongate strip at the other end. The doubled ends are then overlapped and joined adhesively. For the butt splice, the bottom surface of the backing at each end of the elongate strip is coated with an adhesive end overlaid with a strong, thin, tear-resistant, splicing media. Each end for either of these splices may be cut straight or have mating curves of various configurations. Although endless coated abrasive belts containing a splice in the backing are widely used in industry today, these products suffer from some disadvantages which can be attributed to the splice.

For example, the splice is generally thicker than the rest of the coated abrasive belt, even though the methods of splicing generally used involve attempts to minimize this variation in the thickness along the length of the belt. This can lead to a region on the workpiece with a "coarser" surface finish than the remainder of the workpiece, which is highly undesirable, especially in high precision grinding applications. For example, wood with areas having a coarser surface finish will stain darker than the remainder of the wood. Also, the splice can be the weakest area or link in the coated abrasive belt. In extreme cases the splice may break prematurely before full utilization of the coated abrasive belt, which leads not only to waste, but potential hazard. Belts have therefore often been made with laminated liners or backings to give added strength and support. Such belts can be relatively expensive and, under certain conditions, can be subject to separation of the laminated layers.

In addition, abrading machines that utilize a coated abrasive belt can have difficulty properly tracking and aligning the belt because the splice creates a discontinuity in the coated abrasive belt. Furthermore, the spliced area can be undesirably more stiff than the remainder of the belt, and belts including a splice may put undesirable "chatter" marks on the workpiece. Finally, the splice in the belt backing adds considerable expense in the manufacturing process of coated abrasive belts.

Prior references have shown methods for producing endless, seamless abrasive belts. For example, Ball (U.S. Pat. No. 2,404,207) discloses belts produced by a method that utilizes a carrier belt that is rotated around support rolls. A comb removes a carded membrane from a stripper roll to thereby deposit the carded membrane upon the rotating carrier belt. Accordingly, layers of carded membrane are incrementally deposited around a peripheral surface of the carrier belt as the carrier belt is rotated around the support rolls. The carded membrane can be comprised of fibrous materials such that layers of fibrous materials form a web about the carrier belt. A pressure roll is used to compact the web and impregnate the web with an adhesive binder material. Abrasive grains can also be distributed upon the carrier belt through two different control hoppers.

A variation of a butt splice is presented in Dyer (U.S. Pat. No. 4,018,574). Dyer discloses a process for manufacturing an endless coated abrasive article. The process involves inserting a strip of coated abrasive material inside an open-ended cylindrical mold with the abrasive coated surface adjacent to and in contact with an inner peripheral surface of the mold. The strip of coated abrasive material is cut in a shape such that longitudinal edges of the abrasive material abut to form a helical butt joint. A resin composition including a suitable reinforcing material is introduced to the mold after the mold is set in rotation. The rotation of the mold creates centrifugal force which causes the resinous mixture to flow outwardly to thereby distribute the resinous composition uniformly upon the back of the abrasive material. The resin material is then cured to form a layer on the inner periphery of the finished coated abrasive belt. The process results in an endless coated abrasive article that has a helical-shaped seam or splice extending throughout the abrasive material.

EP-A-095 055 refers to abrasive disks or wheels prepared from a mixture of binder and abrasive grains and a substrate layer.

The present invention is directed toward methods for preparing flexible, endless, seamless substrates useful as backings for abrasive materials, according to Claims 1, 23 and 24. Additionally, the present invention is directed toward methods of preparing flexible, endless, seamless abrasive belts incorporating the backings of the invention, according to Claims 20 and 25.

By the phrase "endless, seamless", it is meant that the substrate, i.e., backing loops, are continuous in structure throughout their length. That is, they are free from any distinct places or joints. This does not preclude, however, the possibility of splices and or complete gaps in a fibrous layer embedded within the substrate. Rather, it means that there are no splices or joints in the substrate that result from joining the ends of an elongate strip of substrate material. Accordingly, the flexible, endless, seamless substrate produced by the present inventive method, as well as the flexible, endless, seamless abrasive belts produced by the inventive method, do not exhibit many of the disadvantages associated with coated abrasive belts made from backing loops containing a splice. Furthermore, unlike previous methods, the inventive method herein produces a substrate or an abrasive belt that has a substantially uniform thickness throughout. Preferably, the thickness of the substrate varies by no more than 10%, more preferably no more than about 5%.

The term "flexible" means that the backings and abrasive articles incorporating same are able to be used (for extended periods of time without substantial stretching) as endless abrasives belts in grinding machines. Although the backings (sometimes referred to herein as "substrates") of the invention are flexible, since they are comprised of the fibrous material, the fibrous material increases the tensile strength of the backings and articles so that the backings and articles do not substantially elongate and/or stretch after or during use.

In one inventive method for preparing a flexible, endless, seamless substrate is characterized by inserting a fibrous material adjacent an interior surface of a drum. A composition comprising an organic binder precursor is then provided in the drum, preferably substantially adjacent the fibrous material. A "binder precursor" is a material that is either in a flowable state or capable of flowing, i.e., the term refers to a material that is flowable or flowing at ambient or elevated temperatures and pressures, whereas the term "binder" refers to a "solid" or "solidified" material that does not readily flow under ambient temperatures and pressures. Accordingly, the drum is rotated to create centrifugal forces to thereby distribute the composition uniformly about the fibrous material. The composition is then exposed to conditions sufficient to solidify the organic binder precursor to form a binder such that a flexible, endless, seamless substrate is formed having an outer surface formed adjacent the interior surface of the drum, an inner surface opposite the outer surface, and the fibrous material embedded within the organic binder.

Herein, the term "embedded" means that the reinforcing material is essentially completely encapsulated or engulfed within the organic binder material, so that there may be a very minor percentage of fibers present at the outer surface of the backing. In applications of the present invention, it is preferred that the organic polymeric binder material is present in a sufficient amount to fully surround the fibrous reinforcing material that is present in at least one generally distinct layer across the width, and along the entire length, of the backing loop. In this way, there is generally no fibrous reinforcing material exposed, i.e., there are regions of organic polymeric binder material generally without fibrous reinforcing material therein above and below the layer of reinforcing material.

In preferred applications of the present invention, the binder is present in a sufficient amount to generally seal the surfaces of the backing, although the backing may have some porosity between the sealed surfaces as long as the tensile strength and other mechanical properties are not deleteriously effected. By sealing the fibrous material, a subsequently applied make coating will not penetrate into the backing or substrate. These coatings may contain agents that are deleterious to the backing binder and/or fibrous material, and therefore may cause the backing to undesirably deteriorate or permanently stretch (it being understood that some non-permanent stretching may occur or even be desirable).

Typically, the amount of organic polymeric binder material in the backing is within a range of about 40-99 wt-%, preferably within a range of about 50-95 wt-%, more preferably within a range of about 65-92 wt-%, and most preferably within a range of about 70-85 wt-%, of the total weight of the backing.

One preferred method comprises combining the first two steps of the above inventive method, i.e., spraying or otherwise applying a composition (preferably a slurry) of fibrous material and binder precursor into the drum.

In a second preferred method for preparing the flexible, endless, seamless substrate, the method is characteried by comprises the step of inserting an abrasive agent in the drum such that an abrasive layer is formed upon the inner surface of the flexible, endless, seamless substrate. This method is further characterized by the step of inverting the flexible, endless, seamless substrate, once removed from the drum, such that the abrasive layer is facing outwardly to thereby form a flexible, endless, seamless abrasive belt. The exterior layer of the belts may be immediately dressed, or dressed prior to use, to expose an abrasive layer. "Dressing" is an abrasives industry term used to describe a procedure used to expose abrasive particles, and may be accomplished by any of a variety of methods, typically using a dressing bar or wheel. Dressing bars typically consist of rows of abrasive industrial diamonds or hard ceramic particles referred to in the abrasives art as "superabrasives." Dressing wheels may also be employed, consisting of ceramic vitrified wheels. The dressed abrasive belts may then have coated on the abrasive layer a supersize coating, such as an aqueous epoxy resin having grinding aid dispersed therein. Suitable grinding aids are discussed herein.

In another preferred method, the step of inserting material adjacent the interior surface of the drum is characterized by providing a fibrous mat structure having two ends and a length that is twice as large as an inner circumference of the drum, and inserting the mat structure within the drum in a double-layered configuration such that the two ends of the mat structure are positioned adjacent each other.

In another preferred method, the step of providing the composition comprising an organic binder precursor adjacent the fibrous material is characterized by the steps of placing a first layer of a composition comprising a first solid organic polymeric binder material within the drum adjacent the interior surface of the drum. A fibrous material is then placed adjacent the first layer of the solid organic polymeric organic binder material. A second layer of a second composition comprising a second solid organic polymeric binder material is then placed within the drum such that the fibrous material is positioned between the first and second compositions. The first and second compositions are then heated sufficiently to form first and second organic binder materials in a flowable state.

An alternative method of preparing a flexible, endless, seamless abrasive belt is characterized by the steps of inserting a mixture comprising an abrasive agent and an organic binder precursor within a drum and rotating the drum such that centrifugal forces distribute the mixture uniformly about an interior surface of the drum to form an exterior layer, the interior surface defining a belt width and a belt length. This method further involves the steps of inserting a fibrous material adjacent the exterior layer, providing additional organic binder precursor adjacent the reinforcing material, and rotating the drum such that centrifugal forces distribute the additional organic binder precursor evenly about the reinforcing material. The organic binder precursors are then exposed to conditions sufficient to solidify the organic binder precursors such that a flexible, endless, seamless abrasive belt is formed having a fibrous material embedded within the binders. The method above further comprises the steps of removing the abrasive belt from the drum and treating the exterior layer to form an abrasive layer, such as by decreasing the exterior layer using well known techniques.

Another method of the invention is a method for preparing a flexible, endless, seamless coated abrasive belt. As used herein the term "coated abrasive" means an abrasive article wherein the abrasive coating is formed using conventional make and size coatings. This method is characterized by:
(a) inserting a composition comprising a fibrous material adjacent an interior peripheral surface of a drum, the interior surface defining a substrate width and a substrate length;
(b) rotating the drum such that centrifugal forces distribute the fibrous material about the interior peripheral surface of the drum;
(c) while the drum is rotating, pouring a liquid composition comprising an organic binder precursor into the drum such that centrifugal forces distribute the composition about the fibrous material;
(d) exposing the composition to conditions to solidify the organic binder precursor to form a binder such that a flexible, endless, seamless backing is formed having an outer surface formed adjacent the interior surface of the drum, an inner surface opposite the outer peripheral surface and the fibrous material embedded in the partially hardened binder;
(e) removing the backing from the drum;
(f) slipping the backing over a mandrel;
(g) while rotating the mandrel,
   (i) applying a make coating binder precursor to the backing, and
   (ii) applying a plurality of abrasive particles to the make coating binder precursor;
(h) exposing the make coating binder precursor to conditions sufficient to at least partially solidify the make coating binder precursor;
(i) while rotating the mandrel, applying a size coating binder precursor over the make coating binder precursor and abrasive particles; and
(j) exposing the make coating binder precursor and the size coating binder precursor to conditions sufficient to substantially solidify the make and the size coating binder precursors to form make and size coatings.

A flexible, endless, seamless substrate produced by the methods of the present invention is characterized by an organic binder material and an effective amount of a fibrous material. The phrase "effective amount" of fibrous material refers to an amount sufficient to give the desired physical characteristics of the substrate such as reduction in stretching or splitting during use. The inventive method can produce a substrate that has a layer of fibrous material embedded or engulfed within the organic binder material, such that there are regions of organic binder material free of fibrous material on opposite surfaces of the layer of fibrous material. Accordingly, the surfaces of the substrate have a generally smooth, uniform surface topology, and substantially prevent subsequent coatings from entering the backing.
FIG. 1 is a side view in elevation of a substrate produced by the inventive methods described herein, wherein a portion of the substrate has been removed and shown in detail;
FIG. 2 is a side view in elevation of an abrasive belt produced by the inventive methods described herein, wherein a portion of the abrasive belt has been removed and shown in detail;
FIG. 3 is perspective view of the inventive method and the equipment used therein;
FIG. 4 is a detailed view of a portion of a fibrous mat used in the inventive method;
FIG. 5 is a flow chart of the inventive method shown in FIG. 3;
FIG. 6 is a perspective view of an alternative method and the equipment used therein;
FIG. 7 is a flow chart of the alternative method shown in FIG. 6;
FIG. 8 is a perspective view of another alternative method and the equipment used therein;
FIG. 9 is a flow chart of the alternative method shown in FIG. 8; and
FIG. 10 is a perspective view of a substrate that has been longitudinally cut to form a plurality of substrates.

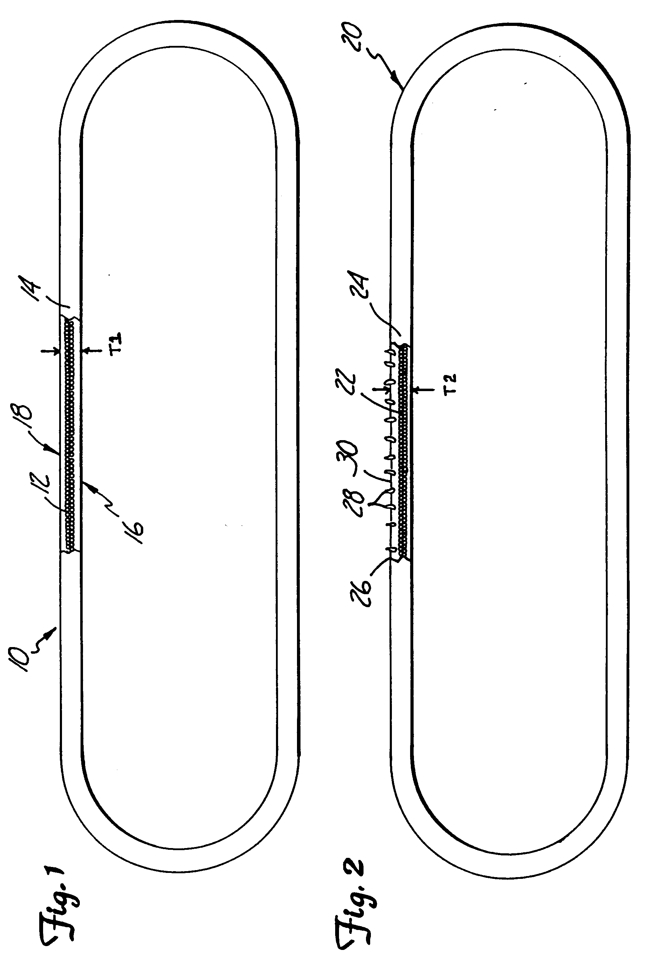

FIGS. 1 and 2 illustrate a flexible, endless, seamless substrate 10 and a flexible, endless, seamless abrasive belt 20 formed by the inventive methods described herein. It should be noted that FIGS. 1 and 2 are not drawn to scale and that thicknesses T1 and T2 of the substrate 10 and the abrasive belt 20, respectively, have been greatly exaggerated for purposes of clarity.

FIG. 1 illustrates a flexible, endless, seamless substrate 10 formed by the present inventive method. A portion of the substrate 10 has been removed for purposes of clarity. As will be discussed below, the inventive method produces a substrate 10 that has a substantially uniform thickness T1 throughout. Herein, the term "substantially uniform" means the thickness preferably varies less than 10% (more preferably less than 5%) throughout the length and width of the substrate 10. The substrate 10 has a layer of fibrous material 12 embedded within an organic binder material 14. The substrate 10 has an inner surface 16 and an outer surface 18, both of which are substantially smooth. The term "smooth" means that the fibers of the fibrous material generally do not protrude from the backing, but are substantially completely engulfed therein, thereby forming a substantially flat surface. Additionally, the outer and inner surfaces are generally sealed, i.e., water cannot penetrate through the backing.

FIG. 2 illustrates a flexible, endless, seamless abrasive belt 20 that is produced by the inventive methods described herein. A portion of the belt 20 has been removed for purposes of clarity. The abrasive belt 20 includes a fibrous material 22 embedded within an organic binder material 24. An abrasive layer 26 is formed by abrasive grains 28 embedded and disposed on the outer surface 30 of the organic binder material 24. The organic binder material 24 has a substantially uniform thickness T2 throughout the flexible, endless, seamless abrasive belt 20.

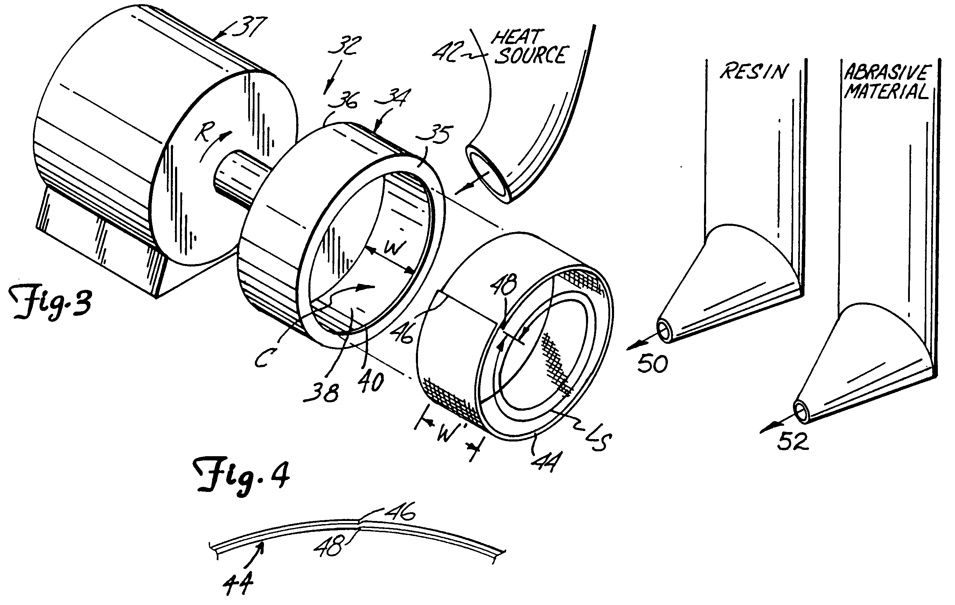

The following is a description of some of the basic equipment used in the inventive methods described herein. FIGS. 3, 6, and 8 show a spin caster 32 having a drum 34 that is attached to a motor 37. A speed control (not shown) is attached to the motor 37 to control the rate of rotation of the drum 34. The drum 34 has an open end 35, a closed end 36, and an interior surface 38 that is preferably substantially smooth (as illustrated), although patterned interior surfaces may be used (such as in methods wherein abrasive grains are first placed in the drum and the drum rotated slowly to insert and hold the grains in the pattern by centrifugal force). The motor 37 and the drum 34 are positioned such that the rotational axis of the drum 34 is horizontal. A retaining lip 40 is provided adjacent the open end 35 of the drum to retain the materials used in the inventive method within the drum 34.

The dimensions of the drum 34 generally correspond to the dimensions of the substrate or the abrasive belts that will be produced. An interior circumference C of the drum 34 (along interior surface 32), will generally correspond to the length of the substrate or the abrasive belt. The width of the substrate or abrasive belt can be of any value less than or equal to the inside width W of the drum 34. Accordingly, a single substrate or belt can be made within the drum 34. Additionally, the substrate or abrasive belt can be slit longitudinally into multiple substrates or belts which have a width substantially less than the original substrate or belt produced by the inventive method.

As will be discussed below, heating materials is a step that may be used in the inventive methods herein. Therefore, a heat source 42 is disposed adjacent the drum 34 such that materials disposed adjacent the interior surface 38 of the drum 34 can be heated.

In many instances, it is preferred that a release coating be applied to the interior surface 38 of the drum 34 before any materials are inserted into the drum 34. This provides for easy release of the substrate or belt after the substrate or belt is solidified. In most instances, this release coating will not become part of the substrate or belt. Examples of such release coatings include, but are not limited to, silicones, fluorochemicals, or polymeric films coated with silicones or fluorochemicals.

FIGS. 3 and 4 illustrate one preferred method of the present invention which produces either a flexible, endless, seamless substrate like that shown in FIG. 1 or a flexible, endless, seamless abrasive belt like that shown in FIG. 2. This particular method involves inserting fibrous material such as a fibrous mat or scrim 44 within the drum 34 adjacent the interior surface 38. Preferably, the scrim 44 should have a width W' that is the same as or less than the inside width W of the drum. In addition, the length Lₛ of the scrim 44 should be such that the scrim 44 can be wrapped inside the drum 34 in a double-layered configuration. Drum 34 is then rotated in the direction R at a desired speed (such as 3,500 rpm) for a few seconds to insure that the scrim 44 is pressed evenly against the interior surface 38. As seen in FIG. 4, the length of the scrim 44 is such that two ends 46 and 48 of the scrim 44 form an abutment relationship, wherein the ends 46 and 48 do not overlap, nor do they leave a gap. Alternatively, the length can be such that the scrim 44 can be wrapped more than twice within the drum 34. However, a thicker than desired substrate or belt may be formed if the scrim 44 is wrapped more than twice. If only a single layer of scrim 44 is used, a weak point may form where the two ends 46 and 48 abut.

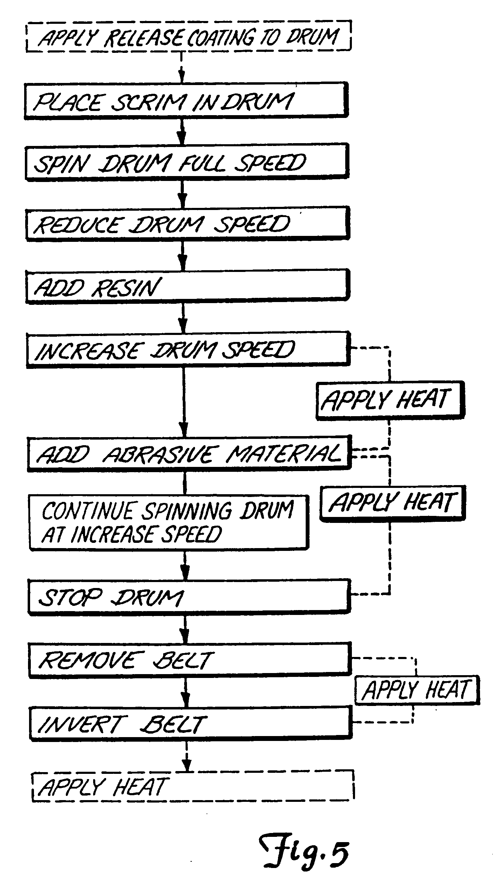

As seen in FIG. 5, the rate of rotation of the drum 34 in this preferred method is reduced to approximately 20% of its maximum speed after the scrim 44 is properly positioned adjacent the interior surface 38. The drum speed is reduced to permit the insertion of an organic binder precursor 50 in the drum, preferably adjacent the scrim 44. The amount of binder precursor 50 that is inserted within the drum 34 is dependent upon a number of factors, including the area of the interior surface 38, the type of binder precursor resin used, and the type of scrim that is used.

Once the binder precursor 50 is inserted within the drum 44, the speed of the drum 44 is increased to nearly its maximum rate (for example 3,450 rpm). The rotation of the drum creates centrifugal forces which distribute the binder precursor 50 evenly about and throughout the scrim 44, such that the scrim 44 is entrapped within the binder precursor 50. Preferably, the scrim 44 is completely encapsulated or engulfed by the binder precursor 50.

Abrasive material such as an abrasive mineral 52 is added after binder precursor 50 is evenly distributed about scrim 44. The amount of mineral inserted is dependent upon a number of factors including the area of drum interior surface 38. The resin in binder precursor 50 will begin to cure while it is being rotated within drum 34. Accordingly, abrasive mineral 52 should be added while binder precursor 50 is still in a flowable state to insure that the abrasive mineral properly adheres to binder precursor 50.

Drum 34 continues to spin at a high speed after abrasive mineral 52 is placed within drum 34. It has been found that drum 34 should continue rotating for a sufficient time (typically at least 45 minutes) after inserting abrasive mineral 52 to insure that abrasive mineral 52 properly adheres to binder precursor 50. Heat may be directed toward interior surface 38 via the heat source 42 to increase the rate at which the resin(s) in the binder precursor cures. Accordingly, as seen in FIG. 5, heat may be applied at various times to insure that the substrate or belt is properly formed and cured. Preferably, heat should be applied during the continued rotation of drum 34 such that the belt can be handled by an operator immediately after the rotation of the drum is stopped.

Drum 34 can be stopped after abrasive mineral 52 is sufficiently adhered to the binder precursor 50, which is now a "binder." An excess amount of abrasive mineral 52 may be present within drum 34 after drum 34 has stopped rotating. This excess mineral should be removed from the drum 34. The flexible, endless, seamless abrasive belt can be removed from drum 34 once the binder precursor 50 is sufficiently cured such that the belt can be handled by an operator. The belt may need to be post-cured at an elevated temperature after the belt has been removed from drum 34. The abrasive layer that is formed by the abrasive mineral 52 during this preferred method is formed upon the inner surface of the belt as it rests within drum 34. Accordingly, the flexible, endless, seamless belt made in accordance with this method must be inverted after it is removed from drum 34 such that the abrasive minerals 52 are positioned on the outer circumference of the belt as seen in FIG. 2.

The above-described preferred method of the invention employs a variable rpm motor/drum arrangement. It is feasible to use another preferred method wherein a single speed "on/off" motor having a rotational speed of about 1750 rpm is used. In this method the fibrous material is rolled such that about 1/2 the length is a double layer. This rolled fibrous material fits through the opening of the drum. After placing the rolled fibrous material into the drum the motor is turned on, thus forcing the fibrous material against the internal surface of the drum by centrifugal force. If the motor is stopped before binder precursor resin is introduced into the drum, the fibrous material may come away from the internal surface of the drum, but is easily returned once the motor is started and the drum rotated again. Binder precursor resin is added while the motor spins the drum, and, once wetted, the fibrous material remains in place adjacent to the interior surface of the drum. Abrasive particles may be added either to the binder precursor resin before application to the fibrous material, or after the binder precursor resin is applied to the fibrous material, to form a flexible, endless, seamless abrasive belt. These belts are typically "dressed" (an industry term used to describe a procedure used to expose abrasive particles) before use by any of a variety of methods, typically using a dressing bar, as is known in the art.

The methods described above produce a flexible, endless, seamless abrasive belt like that shown in FIG. 2. The flexible, endless, seamless substrate shown in FIG. 1 can be attained by eliminating the step of adding an abrasive mineral 52. Although this invention has been described by using a fibrous scrim 44, it is within the scope of the invention to use other fibrous materials that are not in a mat or scrim structure.

Unlike previously known methods, the inventive methods described herein produce a belt or a substrate that has a substantially uniform thickness throughout its width and length. Furthermore, the substrate or belt produced by the present invention possesses a generally uniform tensile strength and high stretch resistance in the longitudinal, i.e., length direction because the fibrous material extends along the entire length of the substrate or belt and because there is no seam. In addition, the methods described above can produce an abrasive belt in essentially one single process, unlike the conventional methods which require providing a substrate, coating a make resin layer, coating abrasive minerals thereon, partially curing the make resin layer, coating a size resin layer, and then curing the make and size resin layers. However, it is within the scope of the present invention to use the backings and abrasive belts of the invention as backings for conventional coated abrasives wherein abrasive particles are adhered to the backing or belt of the invention by make and size coatings.

The methods of the invention may be tailored to produce a substrate that is sufficiently heat-resistant under grinding conditions for which an abrasive article is intended to be used. The substrate should not significantly disintegrate, i.e, split, break, delaminate, tear or a combination of these, as a result of the heat generated during a grinding, sanding, or polishing operation. In addition, the substrate should be sufficiently flexible to withstand grinding conditions. Furthermore, the substrate should bend and return to its original shape without significant permanent deformation. The substrate should also be capable of flexing and adapting to the contour of the workpiece being abraded, yet be sufficiently strong to transmit an effective grinding force when pressed against the workpiece.

There are two basic materials used to produce the inventive substrates; a fibrous material, and an organic binder material. In addition, an abrasive agent such as an abrasive mineral is necessary to form the inventive abrasive belts. The following describes the preferred fibrous materials, binders, and abrasive particles used in relation with the inventive methods described herein. The backing of the present invention includes an effective amount of a fibrous reinforcing material. Herein, an "effective amount" of a fibrous reinforcing material is a sufficient amount to impart at least improvement in desirable characteristics to the backing as discussed above, but not so much as to give rise to any significant number of voids and detrimentally affect the structural integrity of the backing. The primary purposes of the fibrous material are to increase the tear-resistance and stretch-resistance of the flexible, endless, seamless substrate or belt. The fibrous mat used with the present inventive methods may be nonwoven or woven, and composites of adhesive or melt-bondable fibers with continuous strands of fibers or yarns. The latter comprises, for example, a plurality of parallel polyester yarns thermo-bonded onto a nonwoven made of organic melt-bonded staple fibers, such as core/sheath melt-bonded fibers. One preferred composite comprises from about 50 to about 80 weight percent, more preferably from about 60 to about 70 weight percent, of core-sheath melt-bonded fibers, both the core and the sheath comprising polyester, the sheath polyester having lower melting temperature than the core polyester, and about 20 to about 50 weight percent, more preferably from about 30 to about 40 weight percent of polyester continuous parallel fibers having a melting temperature about the same as the melting temperature of the polyester forming the core of the core-sheath fiber. Such webs have a density ranging from about 0.30 to about 0.40 g/cm³.

Typically and preferably, the amount of the fibrous reinforcing material in the backing is within a range of about 1-60 wt-%, preferably 5-50 wt-%, more preferably 8-35 wt-%, and most preferably 15-30 wt-%, based on the total weight of the backing.

The fibrous reinforcing material can be in the form a fibrous mat or web, or a stitchbonded or weft insertion mat. A roving may also be used. A roving is a plurality of fibers or filaments pulled together either without a twist or with minimal twist. A filament is a continuous fiber. Rovings are composed of individual filaments. A fiber mat or web consists of a matrix of fibers, i.e., fine threadlike pieces with an aspect ratio of at least about 100:1. The aspect ratio of a fiber is the ratio of the longer dimension of the fiber to the shorter dimension.

The fibrous reinforcing material can be composed of any material that increases the strength of the backing and that can be inserted into the drum. Examples of useful reinforcing fibrous material in applications of the present invention include metallic or nonmetallic fibrous material. The preferred fibrous material is nonmetallic. The nonmetallic fibrous materials may be materials made of glass, carbon, minerals, synthetic or natural heat resistant organic materials, or ceramic materials. Preferred fibrous reinforcing materials for applications of the present invention are organic materials, glass, and ceramic fibrous material.

By "heat resistant" organic fibrous material, it is meant that useable organic materials should be sufficiently resistant to melting, or otherwise softening or breaking down, under the conditions of manufacture and use of the backings of the present invention. Useful natural organic fibrous materials include wool, silk, cotton, or cellulose. Examples of useful synthetic organic fibrous materials are made from polyvinyl alcohol, nylon, polyester, rayon, polyamide, acrylic, polyolefin, aramid, or phenol.

One particularly preferred class of organic fibrous materials for applications of the present invention are aramid staple fiber-based nonwoven papers wherein the fibers are bound together by an acrylic latex. Such nonwoven papers are commercially available from Veratec, a division of International Paper Co., Tuxedo, NY, and are produced using aramid staple fibers available from E.I. DuPont de Nemours, Inc., Wilmington, DE under the trade designations "Kevlar" and "Nomex."

Generally, any ceramic fibrous reinforcing material is useful in applications of the present invention. Examples of a useful ceramic fibrous reinforcing mat materials suitable for the present invention are "Nextel" 312 and 440 "Ultrafiber Mats" commercially available from 3M. These mats are nonwovens of fine ceramic fibers with no shot, and with no binders added to the mat. The fibers have fiber diameters ranging from about 2 to about 4 micrometers, with fiber lengths ranging from about 2 to about 25 cm. The mats preferably have mat width ranging from about 10 to 40 cm; mat thickness ranging from about 1 to 3 cm; weight per unit area ranging from about 160 to 210 g/m²; and bulk density (with mat thickness of 2.0 cm) ranging from about 8 to 11 kg/m³. The ceramic fibers making up the "440" mats consist of 70 wt. % alumina (Al₂O₃), 28 wt. % silica (SiO₂), and 2 wt. % boria (B₂O₃); while the ceramic fibers making up the "312" mats consist of 62 wt. % alumina, 24 wt. % silica, and 14 wt. % boria.

Examples of useful, commercially available, glass fibrous reinforcing material in yarn or roving form are those available from PPG Industries, Inc. Pittsburgh, PA, under the product name E-glass bobbin yarn; Owens Corning, Toledo, OH, under the product name "Fiberglass" continuous filament yarn; and Manville Corporation, Toledo, OH, under the product name "Star Rov 502" fiberglass roving. The size of glass fiber yarns and rovings are typically expressed in units of yards/lb. Useful grades of such yarns and rovings are in the range of 75 to 15,000 yards/lb, which then are cut so that the roving may be placed into the drum.

If glass fibrous reinforcing material is used, it is preferred that the glass fibrous material be accompanied by an interfacial binding agent, i.e., a coupling agent, such as a silane coupling agent, to improve adhesion to the organic binder material, particularly if a thermoplastic binder material is used. Examples of silane coupling agents include those known under the trade designations "Z-6020" (N-β(aminoethyl)-γ-aminopropyltrimethoxysilane) and "Z-6040" (glycidoxypropyltrimethoxysilane), both available from Dow Corning Corp., Midland, MI. Also effective silane coupling agents are methacrylate- and vinyl-functional silane coupling agents such as 3-methacryloxypropyltrimethoxysilane, and the like, available under the trade name "Z-6030" and triacetoxyvinylsilane, available under the trade name "Z-6075", both available from Dow Corning Corp.

Advantages can be obtained through use of fibrous reinforcing materials of a length as short as 100 micrometers, or as long as perhaps 5 times the circumference of the interior surface of the drum, as long as the material may be fitted into the drum.

The denier of the fibers which make up the fibrous material, i.e., degree of fineness, for preferred fibrous material ranges from about 5 to about 5000 denier, typically between about 5 and about 2000 denier. More preferably, the fiber denier will be between about 5 and about 200, and most preferably between about 5 and about 50. It is understood that the denier is strongly influenced by the particular type of fibrous material employed.

A primary purpose of a mat or web structure is to increase the tear resistance of the backing. Preferably, the mat consists of nonwoven fibrous material at least because of its openness, nondirectional strength characteristics, and low cost. For increased stretch resistance and increasing tensile strength of substrates and belts of the invention, the previously mentioned composites of melt-bondable fibers and continuous yarns are preferred.

A nonwoven mat is a matrix of a random distribution of fibers, preferably staple fibers. This matrix is usually formed by bonding fibers together either autogeneously or by an adhesive. That is, a nonwoven mat is generally described as a sheet or web structure made by bonding or entangling fibers or filaments by mechanical, thermal, or chemical means.

Examples of nonwovens suitable for this invention include open, porous staple fiber webs (such as disclosed in assignee's U.S. Pat. No. 2,958,593, comprising staple fibers entangled together and bound at points of mutual contact by a binder, such as a phenolic resin), spun-bonded, melt-blown, needle-punched, or thermo-bonded webs. A nonwoven web is typically porous, having a porosity of about 15% or more. Depending upon the particular nonwoven employed, the fiber length can range from about 100 micrometers to infinity, i.e., continuous fibrous strands. Nonwoven mats or webs are further described in "The Nonwovens Handbook" edited by Bernard M. Lichstein, published by the Association of the Nonwoven Fabrics Industry, New York, 1988.

The thickness of the fibrous mat structure when applied in typical applications of the present invention generally ranges from about 25 to about 800 micrometers, preferably from about 50 to about 375 micrometers. The weight of a preferred fibrous mat structure generally ranges from about 7 to about 150 grams/square meter (g/m²), preferably from about 17 to about 70 g/m². In certain preferred applications of the present invention, the backing contains only one layer of the fibrous mat structure. In other preferred embodiments it can contain multiple distinct layers of the fibrous mat structure distributed throughout the binder. Preferably, there are 1 to 10 layers, and more preferably 2 to 5 layers, of the fibrous mat structure in backings of the present invention. Preferably about 1-50 wt %, and more preferably about 5-20 wt %, of the preferred backings of the present invention is the fibrous material.

The fibrous reinforcing material can also be in the form of a mat structure containing adhesive or melt-bondable fibers. Such melt-bondable fibers are disclosed in European Patent Application 340,982, published November 8, 1989, which is incorporated herein by reference.

There are a number of organic and synthetic fiber scrims that are useful for the fibrous material. Examples of organic materials include cotton, canvas and wool. Examples of synthetic scrims include nylon, woven nylon, fiberglass, rayon, polyester and "Kevlar." The basic physical requirements of a substrate determine the type of materials that are needed to produce the substrate.

The organic binder precursor material can be a thermosetting, thermoplastic, or elastomeric material or a combination thereof. Preferably, it is a thermosetting or thermoplastic material. More preferably, it is a thermosetting material. In some instances, the use of a combination of a thermosetting material and an elastomeric material is preferable. The preferred materials for the binder precursors include urethane and polyurethanes.

The binder material in the backing is an organic polymeric binder material. It can be a cured or solidified thermosetting resin, thermoplastic material, or elastomeric material. Preferably, the organic polymeric binder material is a cured or solidified thermosetting resin or thermoplastic material. More preferably, the organic polymeric binder material is a thermosetting resin, at least because such resins can be provided in a very fluid (low viscosity) flowable form when uncured, even under ambient conditions. Herein, the phrase "ambient conditions" and variants thereof refer to room temperature, i.e., 15-30°C, generally about 20-25°C, and 30-50% relative humidity, generally about 35-45% relative humidity.

If the organic polymeric binder material of the backing includes a cured thermosetting resin, prior to the manufacture of the backing, the thermosetting resin is in a nonpolymerized state, typically in a liquid or semi-liquid or gel state.

Examples of thermosetting resins from which the backing can be prepared include phenolic resins, amino resins, polyester resins, aminoplast resins, urethane resins, melamine-formaldehyde resins, epoxy resins, acrylated isocyanurate resins, urea-formaldehyde resins, isocyanurate resins, acrylated urethane resins, acrylated epoxy resins or mixtures thereof. The preferred thermosetting resins are epoxy resins, urethane resins, polyester resins, or flexible phenolic resins. The most preferred resins are epoxy resins and urethane resins, at least because they exhibit an acceptable cure rate, flexibility, good thermal stability, strength, and water resistance. Furthermore, in the uncured state, typical epoxy resins have low viscosity, even at high percent solids. Also, there are many suitable urethanes available at high percent solids.

Epoxy-functional resins preferably comprise materials selected from the group consisting of diepoxy-functional materials within the general formula 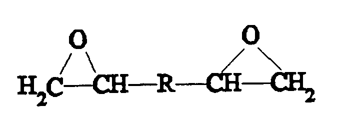 wherein R may be any organic radical with the proviso that the organic radical does not hinder the ability of the material to be emulsified. Preferred are those diepoxy-functional materials wherein R is selected from the group consisting of 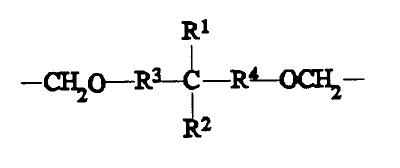 wherein R¹ and R² are independently selected from the group consisting of alkyl groups having from 1 to about 10 carbon atoms, and R³ and R⁴ are independently selected from the group consisting of aryl and alkaryl radicals having from 6 to about 20 carbon atoms. In the latter materials, it is to be understood that R³ and R⁴, if aryl, may be alkyl-substituted. An example of a useful epoxy-functional material of this type is the aqueous dispersion known under the trade designation "EPI-REZ CMD-35201", commercially available from Shell Chemicals, Inc., Houston, TX, wherein R¹ and R² are methyl, and R³ and R⁴ are unsubstituted phenyl moieties.

Another class of epoxy-functional materials suitable for use in producing the inventive binders are those wherein the epoxy-functional material comprises a novolac-type epoxy resin within the general formula 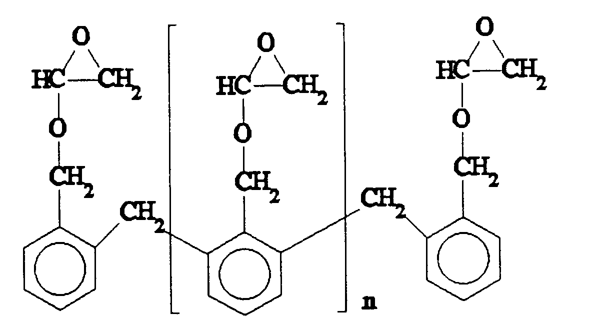 wherein n may range from 1 to about 10. A novolac-type epoxy resin water emulsion is available from Ciba-Geigy Corporation, Hawthorne, NY under the trade designation "MS 9772".

Phenolic resins are usually categorized as resole or novolac phenolic resins. Examples of useful commercially available phenolic resins are those known under the trade designation "Varcum" from BTL Specialty Resins Corporation, Blue Island, IL; "Arofene" from Ashland Chemical Company, Columbus, OH; "Bakelite" from Union Carbide, Danbury, CT; and "Resinox" from Monsanto Chemical Company, St. Louis, MO.

Resole phenolic resins are characterized by being alkaline catalyzed and having a molar ratio of formaldehyde to phenol of greater than or equal to 1:1. Typically, the ratio of formaldehyde to phenol is within a range of about 1:1 to about 3:1. Examples of alkaline catalysts useable to prepare resole phenolic resins include sodium hydroxide, potassium hydroxide, organic amines, or sodium carbonate.

Novolac phenolic resins are characterized by being acid catalyzed and having a molar ratio of formaldehyde to phenol of less than 1:1. Typically, the ratio of formaldehyde to phenol is within a range of about 0.4:1 to about 0.9:1. Examples of the acid catalysts used to prepare novolac phenolic resins include sulfuric, hydrochloric, phosphoric, oxalic, or p-toluenesulfonic acids. Although novolac phenolic resins are typically considered to be thermoplastic resins rather than thermosetting resins, they can react with other chemicals (e.g., hexamethylenetetraamine) to form a cured thermosetting resin.

Epoxy resins useful in the polymerizable mixture used to prepare the hardened backings of this invention include monomeric or polymeric epoxides. Useful epoxy materials, i.e., epoxides, can vary greatly in the nature of their backbones and substituent groups. Representative examples of acceptable substituent groups include halogens, ester groups, ether groups, sulfonate groups, siloxane groups, nitro groups, or phosphate groups. The weight average molecular weight of the epoxy-containing polymeric materials can vary from about 60 to about 4000, and are preferably within a range of about 100 to about 600. Mixtures of various epoxy-containing materials can be used in the compositions of this invention. Examples of commercially available epoxy resins include those known under the trade designations "Epon" from Shell Chemical, Houston, TX; and "DER" from Dow Chemical Company, Midland, MI.

Examples of commercially available urea-formaldehyde resins include those known under the trade designations "Uformite" from Reichhold Chemical, Inc., Durham, NC; "Durite" from Borden Chemical Co., Columbus, OH; and "Resimene" from Monsanto, St. Louis, MO. Examples of commercially available melamineformaldehyde resins include those known under the trade designations "Uformite" from Reichhold Chemical, Inc., Durham, NC; and "Resimene" from Monsanto, St. Louis, MO. "Resimene" is used to refer to both urea-formaldehyde and melamine-formaldehyde resins.

Examples of aminoplast resins useful in applications according to the present invention are those having at least 1.1 pendant α,β-unsaturated carbonyl groups per molecule, which are disclosed in U.S. Patent 4,903,440.

Useable acrylated isocyanurate resins are those prepared from a mixture of: at least one monomer selected from the group consisting of isocyanurate derivatives having at least one terminal or pendant acrylate group and isocyanate derivatives having at least one terminal or pendant acrylate group; and at least one aliphatic or cycloaliphatic monomer having at least one terminal or pendant acrylate group. These acrylated isocyanurate resins are described in U.S. Patent 4,652,274.

Acrylated urethanes are diacrylate esters of hydroxy terminated -NCO- extended polyesters or polyethers. Examples of commercially available acrylated urethanes useful in applications of the present invention include those known under the trade designations "Uvithane 782," available from Morton Thiokol Chemical, Chicago, IL, "Ebecryl 6600," "Ebecryl 8400," and "Ebecryl 88-5," available from Radcure Specialties, Atlanta, GA.

The acrylated epoxies are diacrylate esters, such as the diacrylate esters of bisphenol A epoxy resin. Examples of commercially available acrylated epoxies include those known under the trade designations "Ebecryl 3500," "Ebecryl 3600," and "Ebecryl 8805," available from Radcure Specialties, Atlanta, GA.

Suitable thermosetting polyester resins are those known under the trade designations "E-737" and "E-650" from Owens-Corning Fiberglass Corp., Toledo, OH. Preferred polyurethane resins are high percent solids resins, including those based on aliphatic polyethers, such as the aqueous polyurethane emulsion commercially available from Imperial Chemical Industries under the trade designation "Neorez R-966", which has a weight percent solids of 33%. Other preferred polyurethanes are the aqueous dispersions of polyurethane particles that are commercially available from Witco Corp., under the trade designations "Witcobond 290H" and "Witcobond 293", which both have a weight percent solids of about 66%, an anionic particle charge, and a particle size of 2 micometers. Preferred polyurethanes are made by reacting isocyanate prepolymers with suitable polyols and/or amine curatives. (The term "polyurethane" is generally used in the art and herein to include polymers having urethane and urea linkages, sometimes referred to as polyurethane/polyurea.) Preferred isocyanate prepolymers are those commercially available from Imperial Chemical Industries under the trade designations "PBA 2040", "PBA 2272", "PBA 2280", and "PBA 2234" (which are all modified 4,4'-diaminodiphenylmethane isocyanate prepolymers, having an equivalent weight ranging from about 260 to about 530, an NCO percentage ranging from about 8 to about 16 mole percent, and an isocyanate functionality of ranging from 2 to 3 (the "PBA 2040 version has 0.002 weight percent HCl added, the "PBA 2280 has 0.001 weight percent HCl added, while the other two versions have no HCl added); the polymeric diphenylmethane diisocyanate (MDI), consisting of 18-25% MDI, containing methylene bisphenyl isocyanate, and 75-82% polymethylene polyphenyl isocyanate, commercially available from Dow Chemical Co., under the trade designation "PAPI 2020"; and diphenylmethane diisocyanate (MDI), commercially available from Dow Chemical Co., under the trade designation "Isonate 143L".

Preferred amine curatives include aliphatic and aromatic amines. Preferred aromatic amine curatives include those available under the trade designation "Polamine", particularly "Polamine 1000" and "Polamine 2000", from Air Products and Chemicals, and aromatic diamines such as methylenedianiline and diethyltoluenediamine.

Preferred aliphatic amine curatives include aliphatic diamines such as amino-functional poly(oxyalkylene) compounds available under the trade designation "Jeffamine" from Texaco, Inc., Houston, TX. Generally, the amine-functional material reactivity in producing the inventive binder is
aliphatic > alicyclic > aromatic. Due to the high reactivity of aliphatic diamines, alicyclic, aromatic, and mixed alicyclic and aromatic diamines are preferred.

Poly(oxyalkylene) compounds such as poly(oxyalkylene) amines (POAA) and poly(oxyalkylene) ureides having molecular weight ranging from about 90 to about 1000 are useful amine-functional materials. The poly(oxyalkylene) compounds useful in the invention may or may not have terminal amine functionality.

Useful poly(oxyalkylene) amines which are diamines are selected from the group consisting of compounds represented by general formulas I, II, III, and IV: 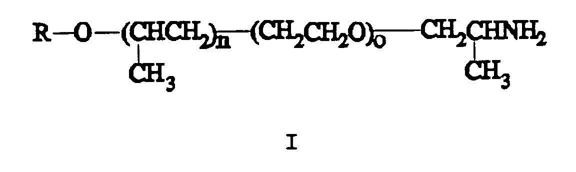 wherein R is an alkyl group having from 1 to 4 carbon atoms and n and o are integers ranging from 0 to 20; 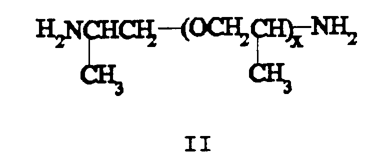 wherein x is an integer ranging from about 2 to about 20; diamines selected from the group consisting of 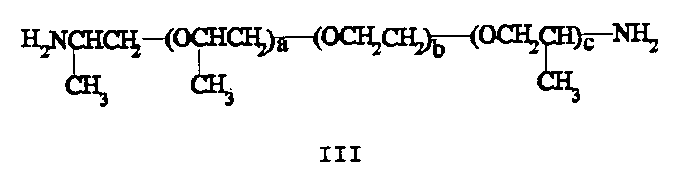 wherein a, b, and c are integers, the sum of a plus c ranges from 1 to 5, and b ranges from 0 to 20; and poly(oxyalkylene) amines which are triamines selected from the group consisting of compounds represented by the general formula 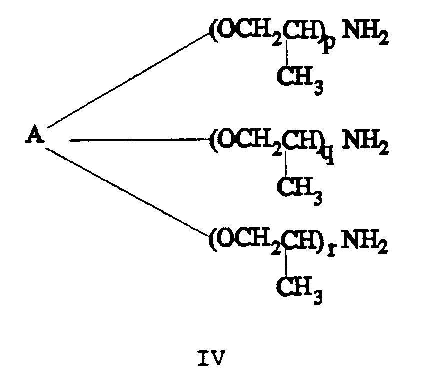 wherein p, q, and r are integers greater than zero such that the sum of p, q, and r ranges from about 5 to about 30, and wherein A is a triol initiator, such as trimethylolpropane, glycerine, or the like.

Representative examples of poly(oxyethylene) amines which are useful in the practice of the invention include: poly(oxypropylene) diamine, poly(oxyethylene-co-oxypropylene) diamine, poly(oxyethylene-co-oxypropylene) urea, poly(oxyethylene-co-oxypropylene) diurea, and the trifunctional reaction products of glycerine or trimethylolpropane with hydroxy-terminated poly(oxypropylene) amine.

As indicated previously, in some applications of the present invention, a thermoplastic binder material can be used, as opposed to the preferred thermosetting resins discussed above. A thermoplastic binder material is a polymeric material that softens when exposed to elevated temperatures and generally returns to its original physical state when cooled to ambient temperatures. During the manufacturing process, the thermoplastic binder is heated above its softening temperature, and often above its melting temperature, to form the desired shape of the abrasive backing. After the backing is formed, the thermoplastic binder is cooled and solidified. Thus, with a thermoplastic material, injection molding can be used to advantage.

Preferred thermoplastic materials useful in the invention are those having a high melting temperature and/or good heat resistant properties. That is, preferred thermoplastic materials have a melting point of at least about 100°C, preferably at least about 150°C. Additionally, the melting point of the preferred thermoplastic materials is sufficiently lower, i.e., at least about 25°C lower, than the melting temperature of the reinforcing material.

Examples of thermoplastic materials suitable for preparations of backings in articles according to the present invention include polycarbonates, polyetherimides, polyesters, polysulfones, polystyrenes, acrylonitrile-butadiene-styrene block copolymers, polypropylenes, acetal polymers, polyamides, polyvinyl chlorides, polyethylenes, polyurethanes, or combinations thereof. Of this list, polyamides, polyurethanes, and polyvinyl chlorides are preferred, with polyurethanes and polyvinyl chlorides being most preferred.

If the thermoplastic material from which the backing is formed is a polycarbonate, polyetherimide, polyester, polysulfone, or polystyrene material, a primer can be used to enhance the adhesion between the backing and the make coat. The term "primer" is meant to include both mechanical and chemical type primers or priming processes. This is not meant to include a layer of cloth or fabric attached to the surface of the backing. Examples of mechanical primers include, but are not limited to, corona treatment and scuffing, both of which increase the surface area of the surface. An example of a chemical primer is a colloidal dispersion of, for example, polyurethane, acetone, a colloidal oxide of silicon, isopropanol, and water, as taught by U.S. Patent No. 4,906,523.

A third type of binder useful in the backings of the present invention is an elastomeric material. An elastomeric material, i.e., elastomer, is defined as a material that can be stretched to at least twice its original length and then retract very rapidly to approximately its original length, when released. Examples of elastomeric materials useful in applications of the present invention include styrene-butadiene copolymers, polychloroprene (neoprene), nitrile rubber, butyl rubber, polysulfide rubber, cis-1,4-polyisoprene, ethylene-propylene terpolymers, silicone rubber, or polyurethane rubber. In some instances, the elastomeric materials can be crosslinked with sulfur, peroxides, or similar curing agents to form cured thermosetting resins.

The abrasive minerals suitable for this invention include fused aluminum oxide, heat treated aluminum oxide, ceramic aluminum oxide, ceric oxide, silicon carbide, iron oxide, alumina zirconia, garnet, diamond, cubic boron nitride, or mixtures thereof. The term "abrasive material" encompasses abrasive grains, agglomerates, or multi-grain abrasive granules. An example of such agglomerates is described in U.S. Patent No. 4,652,275, which is incorporated herein by reference. It is also with the scope of the invention to use diluent erodable agglomerate grains as disclosed in U.S. Pat. No. 5,078,753.

A preferred abrasive material is an alumina-based, i.e., aluminum oxide-based, abrasive grain. Useful aluminum oxide grains for applications of the present invention include fused aluminum oxides, heat treated aluminum oxides, and ceramic aluminum oxides, including those having rare earth oxides therein. Examples of useful ceramic aluminum oxides are disclosed in U.S. Patent Nos. 4,314,827, 4,744,802, 4,770,671, and 4,881,951.

The average particle size of the abrasive grain for advantageous applications of the present invention is at least about 0.1 micrometer, preferably at least about 100 micrometers. A grain size of about 100 micrometers corresponds approximately to a coated abrasive grade 120 abrasive grain, according to American National Standards Institute (ANSI) Standard B74.18-1984. The abrasive grain can be oriented, or it can be applied to the backing without orientation, depending upon the desired end use of the backing.

Alternatively, the abrasive material can be in the form of a preformed sheet material coated with abrasive material that can be laminated to the outer surface of an endless, seamless backing loop. The sheet material can be from cloth, paper, vulcanized fiber, polymeric film forming material, or the like. Alternatively, the preformed abrasive coated laminate can be a flexible abrasive member as disclosed in U.S. Patent No. 4,256,467. Briefly, this abrasive member is made of a non-electrically conductive flexible material or flexible material having a nonelectrically conducting coating. This material is formed with a layer of metal in which abrasive material is embedded. The layer of metal is adhered to a mesh material.

### Optional Backing Additives

A number of optional materials that may be suitable for use in the inventive articles and methods are presented in assignee's World Pat. Application No. WO 93/12911, published July 8, 1993.

For example, incorporation of a toughening agent into the backing will be preferred for certain applications. Preferred toughening agents include rubber-type polymers or plasticizers. The preferred rubber toughening agents are synthetic elastomers. Preferably, at least an effective amount of a toughening agent is used. Herein, the term "effective amount" in this context refers to an amount sufficient to impart improvement in flexibility and toughness.

Other materials that can be advantageously added to the backing for certain applications of the present invention include inorganic or organic fillers. Inorganic fillers are also known as mineral fillers. A filler is defined as a particulate material, typically having a particle size less than about 100 micrometers, preferably less than about 50 micrometers. The filler may also be in the form of solid or hollow spheroids, such as hollow glass and phenolic spheroids. Fillers are capable of being dispersed uniformly within the binder material. Examples of useful fillers for applications of the present invention include carbon black, calcium carbonate, silica, calcium metasilicate, cryolite, phenolic fillers, and polyvinyl alcohol fillers. If a filler is used, it is theorized that the filler fills in between the reinforcing fibers, and possibly prevents crack propagation through the backing. Typically, a filler would not be used in an amount greater than about 70 weight percent based on the weight of the binder of the backing, or if in the abrasive layer, no greater than 70 weight percent of the weight of the abrasive layer binder.

Other useful materials or components that can be added to the backing for certain applications of the present invention are pigments, oils, antistatic agents, flame retardants, heat stabilizers, ultraviolet stabilizers, internal lubricants, antioxidants, and processing aids. Examples of antistatic agents include graphite fibers, carbon black, metal oxides such as vanadium oxide, conductive polymers, humectants and combinations thereof. These materials are further described in World Application numbers WO 93/24279, published December 9, 1993, and WO 93/15879, published August 19, 1993.

As previously mentioned, the abrasive belts of the invention may have coated thereon a so called supersize coat, which preferably includes a grinding aid, to enhance the abrading characteristics of the inventive abrasives. Examples of grinding aids include potassium tetrafluoroborate, cryolite, ammonium cryolite, or sulfur. One would not typically use more of a grinding aid than needed for desired results.

### EXAMPLES

The present invention will be further described by reference to the following detailed examples.

The drum which was used to construct the following examples had an inner diameter of 12.4 cm. Accordingly, the fibrous scrim used in these examples was cut to 77.9 cm, exactly twice the inner circumference of the drum. The drum had an inside width of 7.0 cm. Therefore, the drum had an inside surface area of 272.7 cm². The following designations are used throughout the examples.
SN = woven nylon scrim, starch sized nylon 6/6, 840 denier, 630 strands per meter lengthwise and 590 strands per meter widthwise, commercially available from Burlington Industries, product number 61501/16/70;
SC = cotton canvas cloth;
SS = spun-laced polyester scrim, commercially available from DuPont under the trade designation "Sontara" type 8801;
SF = fiberglass scrim, 38 holes per cm, commercially available from Clark-Schwebel, style 1614, finish CS-649;
R1 = an oligomeric diamine, commercially available from Air Products and Chemical, Inc., Allentown, Pennsylvania, under the trade designation "Versalink 1000";
R2 = an oligomeric diamine, commercially available from Air Products and Chemical, Inc., Allentown, Pennsylvania, under the trade designation "Versalink 2000";
R24= a modified 4,4'-diaminodiphenylmethane isocyanate prepolymer, having an equivalent weight of about 420, an NCO percentage of 10 mole percent, and an isocyanate functionality of 2, commercially available from Imperial Chemical Industries, under the trade designation "PBA 2040";
RN = an aqueous polyurethane emulsion having a percent solids of 33%, the polyurethane based on an aliphatic polyether, commercially available from Imperial Chemical Industries under the trade designation "Neorez R-966";
RW = an aqueous dispersion of polyurethane particles, having a weight percent solids of about 65%, an anionic particle charge, and a particle size of 2 micometers, commercially available from Witco Corp., under the trade designation "Witcobond 290H";
C2 = polymeric diphenylmethane diisocyanate (MDI), consisting of 18-25% MDI, containing methylene bisphenyl isocyanate, and 75-82% polymethylene polyphenyl isocyanate, commercially available from Dow Chemical Co., under the trade designation "PAPI 2020";
C3 = diphenylmethane diisocyanate (MDI), commercially available from Dow Chemical Co., under the trade designation "Isonate 143L";
UR1 = 73 weight percent of a ketoxime-blocked poly-1,4-butylene glycol diisocyanate having a molecular weight of about 1500 commercially available from Uniroyal Chemical Corp. under the trade designation "BL-16", 9.45 weight percent methylene diamine, and 17.55 weight percent 1-methoxy-2-propyl acetate;
CW = aqueous epoxy resin dispersion, commercially available from Witco Corp., under the trade designation "Witcobond XW";
M1 = an agglomerate of individual abrasive grains, the agglomerates having an average particle size of about 375 micrometers, made in accordance with the teachings of U.S. Pat. No. 4,799,939, using 180 grade (80 micrometer average particle size) fused Al₂O₃, available from 3M;
FSX = grade 80 (200 micrometer average particle size blue heat treated aluminum oxide (Al₂O₃) abrasive mineral, available from Treibacher, Treibach, Austria;
ER1 = a diglycidyl ether of bisphenol A epoxy resin commercially available from Shell Chemical Co., Houston, TX, under the trade designation "Epon 828";
ER2 = an aliphatic diglycidyl ether epoxy resin commercially available from the Shell Chemical Co., Houston, TX, under the trade designation "Epon 871";
ECA = a polyamide curing agent for the epoxy resin, commercially available from the Henkel Corporation, Gulph Mill, PA, under the trade designation "Versamid 125."
GEN = a fatty amidoamine resin known under the trade designation "Genamid 490", available from Henkel Corp., Gulph Mills, PA;
EPOX-4 = a combination of 50 weight percent ER1 and 50 weight percent GEN;
EPOX-7 = a combination of 25 weight percent ER1, 25 weight percent ER2, and 50 weight percent ECA;
P140 = a modified solvent-free polyether based on propylene oxide and a triol, having an OH equivalent of approx. 250, known under the trade designation "Blendur P 140M", from Mobay Corporation, Pittsburgh, PA;
P120 = a modified solvent-free polyether polyol liquid having an OH number of approx. 32, known under the trade designation "Blendur P 120M", from Mobay Corporation, Pittsburgh, PA;
5006 = an aromatic modified polyisocyanate based on MDI, having an NCO equivalent of about 160-170, known under the trade designation "Baymidur KU 3-5006", from Mobay Corporation, Pittsburgh, PA;
A3220 = 70% solids in solvent (comprising 10% "Polysolve" and 90% water) consisting of 48% resole phenolic resin and 52% calcium carbonate filler;
"Polysolve" = a water/solvent blend known under the trade designation "Polysolve 1984PM" containing 15% water and 85% propylene glycol monomethyl ether, available from Worum Chemical Co. in St. Paul, MN;
SOL = an organic solvent which is a blend of light aromatic hydrocarbons known under the trade designations "Aromatic 100" and "Shell CYCLO SOL 53 Solvent", commercially available from Worum Chemical Co., St. Paul, MN.

The following examples listed in Table 1 present various polyurea binder compositions that were used in conjunction with the method described in FIGS. 3-5. The amine and isocyanate compounds listed in Table 1 were mixed according to the various instructions provided by the manufacturers of the materials. The amount listed is the mixed amount. Some of these examples were then subjected to the test procedure described below.

**TABLE 1**

| Example | scrim | Binder tot. weight, gms | mineral M1 (grams) |
|---|---|---|---|
| 1 | SS | R1, C2 (37 gms) | 65 |
| 2 | SC | R1, C2 (36.4 gms) | 50.7 |
| 3 | SN | R1, C2 (48 gms) | 89 |
| 4 | SF | R1, C2 (23.4 gms) | 71.7 |
| 5 | SC | R2, C2 (36.4 gms) | 61 |
| 6 | SN | R2, C2 (36 gms) | 101 |
| 7 | SF | R2, C2 (21.5 gms) | 53.1 |
| 8 | SF | RW, CW (27.8 gms) | 61.9 |
| 9 | SN | RN (63 gms) | 108.3 |
| 10 | SN | R2, C3 (28 gms) | 77.2 |
| 11 | SC | R1, C3 (32 gms) | 60 |

### Test Procedure 1: Aluminum Workpiece

Test procedure 1 was designed to test the cut of the abrasive belts of Examples 2, 4, 6, 7, 9, 10 , and 11. The abrasive belt in each case was placed on a pneumatic expanding wheel which, when expanded, securely held the belt. The wheel and belt were connected to a hand-held sander made by Pneu-Matic Grinders, Inc., (Cleveland, OH), Model #620. A preweighed aluminum workpiece, approximately 6.35 cm x 30 cm x 1.5 mm was securely held by two clamps, and the top surface of the workpiece abraded. The test was run until about 1 gram of material was removed from the workpiece. The workpiece was weighed, and the weight of workpiece removed per minute ("cut") was calculated by dividing the total weight difference by the abrading time. The results are recorded in grams/minute. The results are listed in Table 2.

**TABLE 2**

| Example | grams cut/minute |
|---|---|
| 2 | 1.3 |
| 4 | 0.5 |
| 6 | 1.4 |
| 7 | 0.2 |
| 9 | 1.5 |
| 10 | 1.0 |
| 11 | 0.5 |

It should be noted that, in view of the tests above, generally, the preferred combination of materials utilized with the inventive method described in FIGS. 3-5 is a polyurea resin, made using the amine curatives "Polamine 1000" or "Polamine 2000", reacted with a diphenylmethane diisocyanate, e.g., PAPI 2020 from Dow Chemical Co., and a woven nylon scrim.

### Alternative Method #2

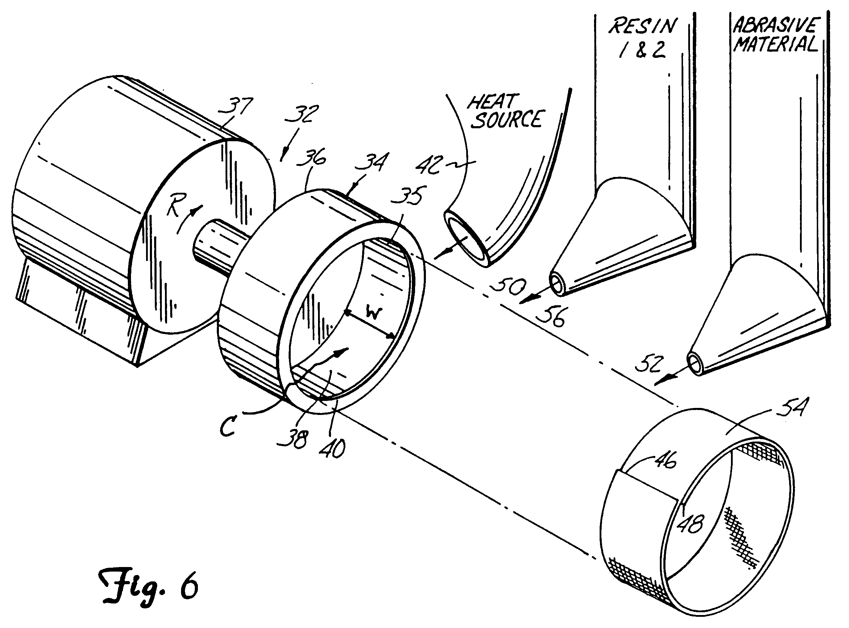

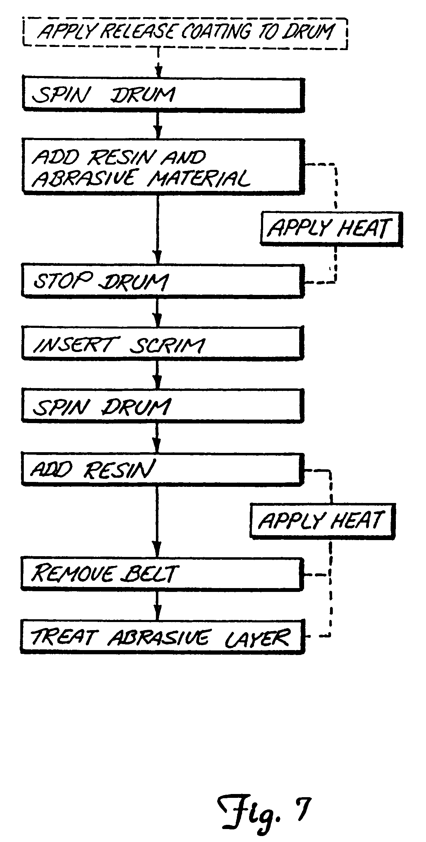

FIGS. 6 and 7 show an alternative method of the present invention. With this alternative method, a mixture of a resinous slurry 50 and an abrasive material such as an abrasive mineral 52 is inserted into the drum 34 which is rotating in a direction R. As seen in FIG. 7, heat from the heat source 42 may be applied to the interior surface 38 of the drum to partially cure the resin 50 to thereby form an exterior layer adjacent the interior surface 38 of the drum 34. The drum 34 is then stopped to permit the insertion of a scrim 54 that is in a doubled-layered configuration much like that discussed in FIG. 3. The drum is then spun at a high speed to press the scrim 54 against the exterior layer formed by the resin 50 and the abrasive material 52. Additional resin 56 is then added to the drum such that the scrim 54 becomes engulfed within a layer of resin. The belt is removed from the drum 34 once the resin 50 and 56 has cured sufficiently. There is no need to invert the abrasive belt formed by this method, since the exterior layer is already on the outer surface of the belt. However, the exterior layer must be treated in some manner in order to expose the abrasive mineral on the exterior layer. A dressing bar (not shown) can be used to treat the exterior layer such that the abrasive minerals are exposed to form an abrasive belt like that shown in FIG. 2.

### Alternative Method #3

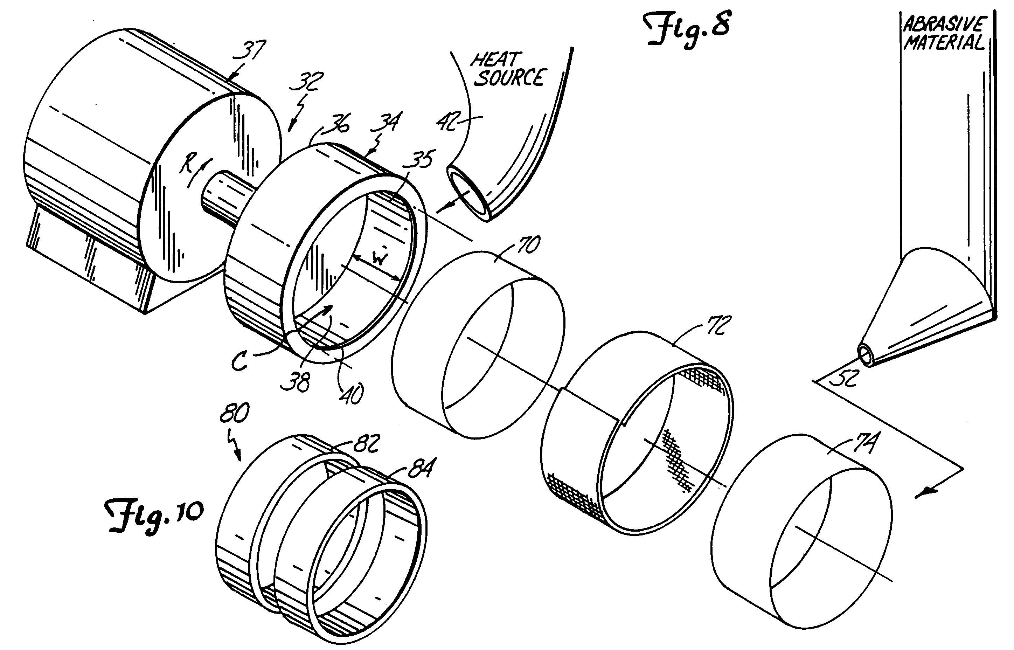

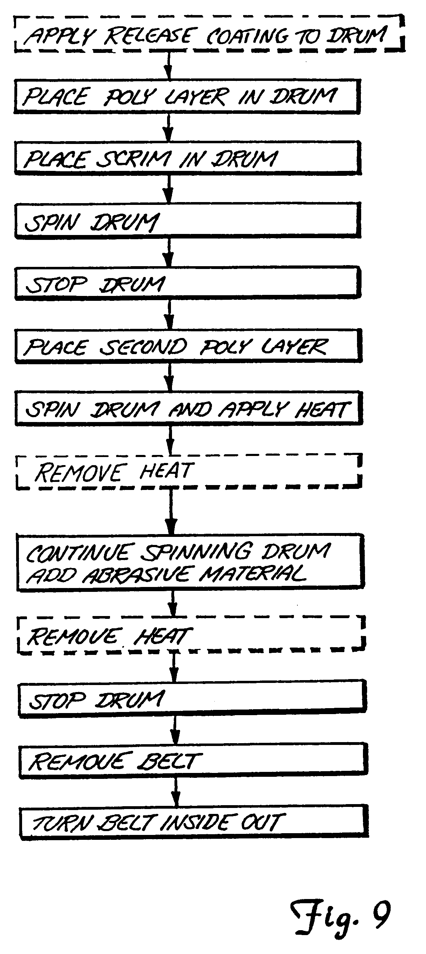

FIGS. 8 and 9 present another alternative method of the present invention. With this method, the organic binder material is comprised of a thermoplastic binder material. A thermoplastic binder material is a polymeric material that softens when exposed to elevated temperatures and generally returns to its original physical state when cooled to ambient temperatures. The preferred thermoplastic materials of the invention are those having a high melting temperature and/or good heat resistant properties. That is, preferred thermoplastic materials have a melting point of at least about 100°C, preferably about at least 150°C. Additionally, the melting point of the preferred thermoplastic materials is sufficiently lower, i.e., at least about 25° lower, than the melting temperature of the reinforcing material. Preferably, the thermoplastic material is a polyamide, polyurethane, or a polyvinyl chloride.

As seen in FIGS. 8 and 9, this inventive method essentially involves inserting a first loop 70 of thermoplastic binder material adjacent the interior surface 38 of the drum 34. A scrim 72, is cut and configured much like the scrim 44 described in FIG. 3, and is placed within the first loop 70. The drum is then spun in the direction R such that the scrim 72 is properly positioned against the first loop 70. A second loop of thermoplastic binder material is then inserted within the drum 34 such that the scrim 72 is positioned between the first loop 70 and the second loop 74.

The drum is then rotated in the direction R while sufficient heat is applied via the heat source 42 toward the interior surface 38 of the drum 34. The heat source 42 provides sufficient heat such that the thermoplastic binder materials obtain a flowable state to thereby permit centrifugal forces to distribute the thermoplastic material evenly about the scrim 72 such that the scrim 72 is embedded within the thermoplastic material. As seen in FIG. 9, the heat can be removed once the thermoplastic material is evenly distributed about the scrim 72, Preferably, immediately after removing the heat, an abrasive material 52 is inserted within the drum. The drum should continue rotating until the abrasive material 52 is sufficiently adhered to the thermoplastic material. Once the thermoplastic material is cooled and solidified, the belt can be removed from the drum and turned inside out to thereby form an abrasive belt much like that shown in FIG. 2.

A substrate can be made by the method above by eliminating the step of inserting the abrasive material 52.

### Examples 12-17

Backings useful for producing coated abrasives were prepared in these examples. Each backing was 48.3 cm long by 4.5 cm wide. The fibrous reinforcement used in Examples 12-17 was a composite material made by 3M comprising a nonwoven layer comprising core-sheath melt-bondable fibers (polyester/polyester) made on a Rando-Web making machine and a plurality of continuous, generally parallel polyester yarns thermally bonded to the nonwoven so that the length of the yarns extended the entire length of the composite. The yarn was in the form of a plurality of yarn lengths arranged generally parallel to each other and spaced apart such that there were 18 yarns per 2.54 cm of composite width. The yarns were also generally parallel to the length dimension of the finished backing, therefore providing increased tensile strength and tear resistance, as well as increased stretch resistance to the backings. The composite was 4.2 cm wide and 49 cm in length in each example backing. Backings of Examples 12 and 13 employed one layer of the fibrous composite, while the backings of Examples 14-17 employed two layers of fibrous composite. Backings of Examples 12-13 employed as the binder resin EPOX-4. Backings of Examples 14-18 employed as binder resin a mixture comprised of 6 parts, 4 parts, and 5 parts respectively of P140, P120, and 5006, respectively. The binder for Examples 16-17 additionally had 30 weight percent calcium carbonate filler added thereto as a percentage of the total weight of binder and filler.

### Tensile Test Procedure and Results

Strips of dimensions 2.5 cm by 17.8 cm were taken from endless, seamless backings of Examples 12-17. The strips were taken from the backings in two directions: Strips were taken in the length direction (BD) and from the cross direction (CD) (normal to the length direction).

These strips were tested for tensile strength using a tensile testing machine known under the trade designation "Sintech", which measured the amount of force required to break the strips. The machine has two jaws. Each end of a strip was placed in a jaw, and the jaws moved in opposite directions until the strips broke. In each test, the length of the strip between the jaws was 12.7 cm and the rate at which the jaws moved apart was 0.5 cm/sec. In addition to the force required to break the strip, the percent stretch of the strip at the break point was determined for both the machine and cross direction samples. "% stretch" is defined as [(final length minus original length)/original length], and this result multiplied by 100. Data recorded in Table 3 include break load, percent stretch at break, tensile modulus, percent stretch at 45.4 kg load, and percent stretch at 20.4 kg load.

**Table 3**

| Ex. | Break Load (Kg) | % Str.@ Break (%) | Modulus (Kg/cm²) | % Stretch @ 45.4 Kg (%) | % Stretch @ 20.4 Kg (%) |
|---|---|---|---|---|---|
| 12 | 77 | 13.3 | 281 | 3.80 | 1.1 |
| 13 | 62 | 20.8 | -- | 5.72 | 2.7 |
| 14 | 104 | 16.6 | 140 | 7.75 | 2.0 |
| 15 | 112 | 17.7 | 164 | 7.74 | 1.9 |
| 16 | 105 | 16.3 | 139 | 7.86 | 2.0 |
| 17 | 100 | 16.0 | 190 | 7.79 | 1.7 |

### Examples 18-24

Endless, flexible, seamless backings, and coated abrasives incorporating same, of the invention were prepared in these examples.

### Production of Backings of Examples 18-24

Endless, flexible, seamless backings of the invention were prepared using the methods illustrated in Figs. 3-4 to produce backings illustrated in Fig. 1. A cup-shaped aluminum drum (such as depicted in FIG. 8 at 34) was formed by machining a cylinder of cast aluminum to form a hollow portion having an internal diameter of 18.6 cm and a depth (width W in FIG. 8) of 10.8 cm. A 0.64 by 0.64 cm angle retaining lip (40) was formed in the mold at the open end 35 of drum 34. Thus, each backing formed was 61 cm long and 10.2 cm wide. On the rear, outside of the mold was shaped a coupling type connector so the mold could be mounted on a standard 1.27 cm diameter motor shaft. This mold was mounted on a single speed AC motor, 1/2 HP, which spun the mold at 1750 rpm when turned on, and a set screw used to hold the mold onto the motor shaft. The mold interior was sprayed with a silicone spray mold release material (known under trade designation "RAM Mold Release 225", available from RAM Products, Gardena, California).

Next, the desired fibrous material was rolled such that about 1/2 the length is a double layer, and the rolled fibrous material fitted through the open end of the drum. After placing the rolled fibrous material into the drum the motor was turned on, thus forcing the fibrous material against the internal surface of the drum by centrifugal force. Binder precursor resin was then added using a cup while the motor spun the drum, and, once wetted, the fibrous material remained in place adjacent the interior surface of the drum. The mold was spun for 10 minutes at 1750 rpm while a 1000 watt heat gun was used to blow hot air into the mold cavity (onto the resin) as the mold was spinning to the binder precursor resin.

### Production of Coated Abrasives of Examples 18-24

After endless, flexible, seamless backings of Examples 18-24 were formed they were slipped over a mandrel and spray coated with make binder precursor composition, followed by electrostatic application of abrasive mineral, followed in turn by exposure to a heat source until the make binder was formed. A size binder precursor composition was then applied, heated to cure, and the completed coated abrasive belt removed from the mandrel. The make and size binder precursor compositions in each of Examples 18-24 was A3230, while the abrasive mineral employed in each case was FSX.

Table 4 details the construction of abrasive belts of Examples 18-24, including abrasive grain add-on weight, make and size add-on weights, and tensile, stretch and abrasive performance data, where "cut" equals weight in grams of workpiece removed in 12.5 minutes. The workpiece in each case was particle board, and the abrasive performance test is described below. Prior to testing according to the Particle Board Test, the coated abrasive was flexed, i.e., the abrasive coating was uniformly and directionally cracked, using a 2.54 cm supported bar.

### Test Procedure 2: Particle Board Test

The coated abrasive belt (10 cm x 61 cm) was installed on a take-about belt type grinder. The workpiece for this test was 1.9 cm x 9.5 cm x 150 cm industrial grade, 20.4 kg density, low emission urea-formaldehyde particle board available from Villaume Industries, St. Paul, MN. Five workpieces were initially weighed. Each workpiece was placed in a holder with the 9.5 cm face extending outward. A 15.3 kg load was applied to the workpiece. The 9.5 cm face was abraded for 30 seconds. The workpiece was reweighed to determine the amount of particle board removed or cut. The total cut of the five workpieces were recorded. This sequence was repeated 5 times for each workpiece for a total of 12.5 minutes of grinding. The control example for this test was a 3M 761D grade 80 (average particle size 204 micrometers) "Regalite" Resin Bond Cloth coated abrasive, commercially available from 3M, which exhibited a total cut of 67.7 gms/12.5 min of cutting. The grinding results for Examples 18-24 can be found in Table 4. The percentage of control was determined by: dividing the cut associated with the particular example by the cut associated with the control example, times 100.

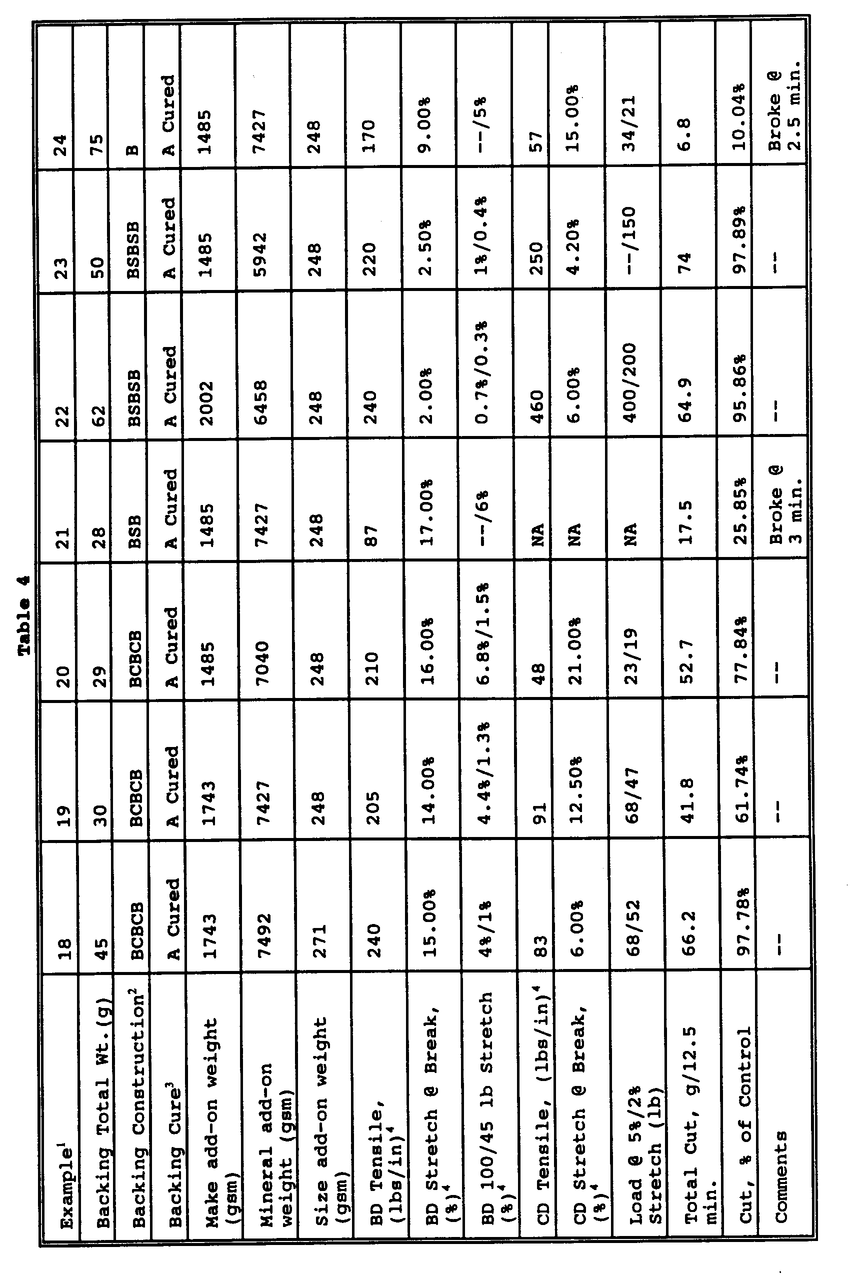

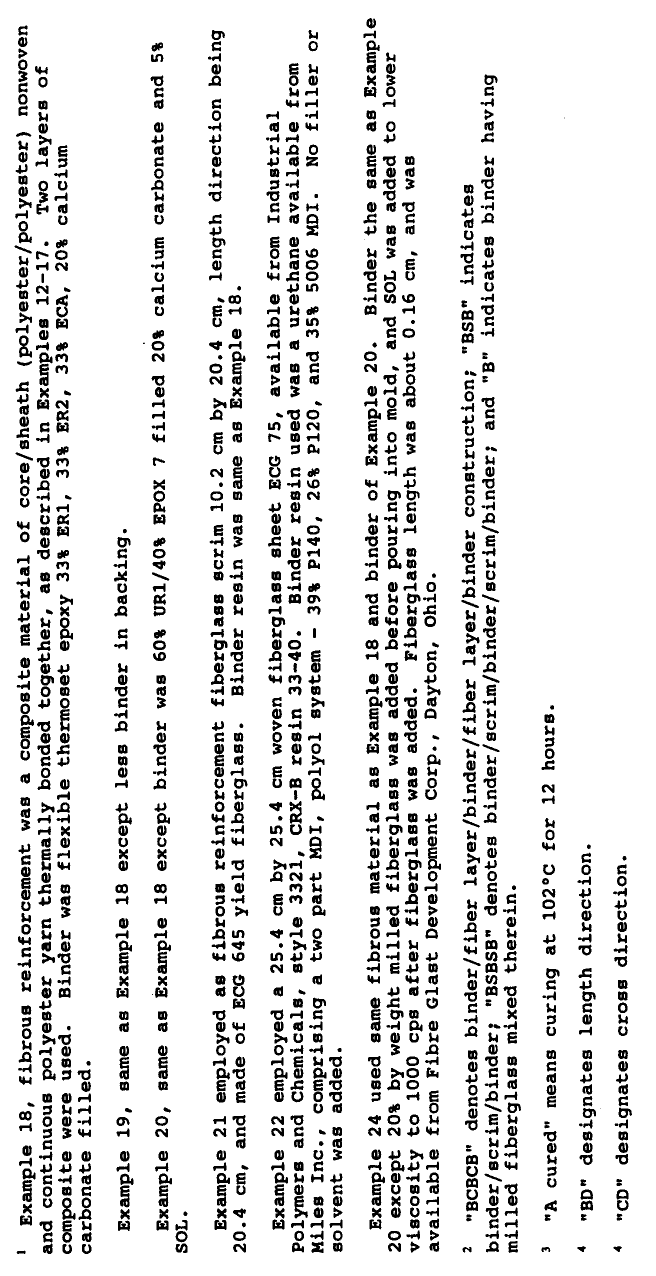

Although the present invention has been described with reference to preferred embodiments, workers skilled in the art will recognize that changes may be made in form and detail without departing from the spirit and scope of the invention. In particular, one skilled in the art will recognize that a large variety of sizes of belts may be made via the inventive method by simply changing the size of the drum. Further, those skilled in the art will recognized that the interior surface of the drum may be patterned (in relief) or grooved such that the resulting abrasive belts would be patterned or grooved on its grinding surface. The interior of the drum may be provided with a permanent release coating, such as polytetrafluorethylene. In this case the belt would not have to be inverted. The patterned surface could also be on the nonabrasive surface of the belt, which may provide higher friction between the belt and backup rollers which drive the belt. In addition, as seen in FIG. 10, a belt or substrate 80 produced by this method can be cut after it has been removed from the drum to produce a plurality of belts or substrates 82 and 84. Accordingly, it is within the scope of this invention to use a very large drum to thereby provide for the mass production of flexible, endless, seamless substrates or belts.

## Claims

1. A method for preparing a flexible, endless, seamless substrate suitable for use as a backing for a coated abrasive, the method characterized by the steps of:
(a) inserting a fibrous material adjacent an interior peripheral surface of a drum, the interior surface defining a substrate width and a substrate length;
(b) placing a composition comprising an organic binder precursor material within the drum;
(c) rotating the drum such that centrifugal forces distribute the composition about the fibrous material and about she interior peripheral surface of the drum; and
(d) exposing the composition to conditions to sufficiently solidify the organic binder precursor to form a binder such that a flexible, endless, seamless substrate is formed having an outer surface formed having an outer surface formed adjacent the interior peripheral surface of the drum, an inner surface opposite the outer surface and the fibrous material embedded in the binder.

2. The method of claim 1 further including the step of providing an abrasive coating on the substrate.

3. The method of claim 1 further characterized by the organic binder precursor material including a thermosetting resin, and the method including the step of inserting an abrasive agent in the drum such that an abrasive layer is formed upon the inner surface of the flexible seamless substrate.

4. The method of claim 3 further characterized by the step of inserting the abrasive agent includes inserting an abrasive mineral in the drum after the composition comprising the organic binder precursor material has been uniformly distributed about the fibrous material and before the organic binder precursor material is solidified.

5. A method of making a coated abrasive by the method of claim 1 further characterized by including applying a make coating binder precursor to the substrate, the make coating precursor including a first resin, exposing the make coating binder precursor to conditions sufficient to form an at least partially cured make coating, applying abrasive grains to the partially cured make coating, applying a size coating binder precursor over the abrasive grains and the partially cured make coating, the size coating binder precursor including a second resin, and exposing the make and size coating binder precursors to conditions to form substantially completely cured first resin and second resin.

6. The method of claim 5 further including applying a supersize coating over the substantially completely cured first resin and second resin.

7. A method of making a coated abrasive by the method of claim 1 further characterized by including applying a make coating binder precursor to the substrate, the make coating precursor including a first resin, applying abrasive grains to the make coating binder precursor, applying a size coating binder precursor over the abrasive grains and the make coating binder precursor, the size coating binder precursor including a second resin, and exposing the make and size coating binder precursors to conditions to substantially completely cure the first resin and the second resin.

8. The method of claim 7 further including applying a supersize coating over the substantially completely cured first resin and second resin.

9. The method of claim 1 further characterized by the fibrous material being present at a weight percentage ranging from about 1 to about 60 weight percent.

10. The method of claim 1 further characterized by the fibrous material being glass fibers and the organic binder precursor including isocyanates and aromatic amines.

11. The method of claim 3 further characterized by the step of inverting the flexible seamless substrate such that the abrasive layer is facing outwardly.

12. The method of claim 1 wherein the step of inserting fibrous material is characterized by the steps of:
(a) inserting at least one fibrous mat structure within the drum, the mat selected from the group consisting of nonwoven mats, woven mats, and composites of nonwoven mats and a plurality of continuous yarns, the continuous yarns generally parallel to the substrate length; and
(b) rotating the drum such that centrifugal forces position the mat structure against the interior surface of the drum.

13. The method of claim 1 further characterized by the step of inserting the fibrous material including the steps of:
(a) providing a fibrous mat structure having two ends and a length that is twice as large as an inner circumference of the drum, the mat selected from the group consisting of nonwoven mats, woven mats, and composites of nonwoven mats and a plurality of continuous yarns, the continuous yarns generally parallel to the substrate length; and
(b) inserting the mat structure within the drum in a doubled layered configuration such that the two ends of the mat structure are positioned adjacent each other.

14. The method of claim 1 wherein the step of placing a composition comprising an organic binder precursor material within the drum is characterized by the steps of:
(a) providing a liquid organic binder precursor resin; and
(b) placing the liquid organic binder precursor resin into the drum.

15. The method of claim 14 further characterized by the step of placing the liquid organic binder precursor into the drum occuring when the drum is rotating.

16. The method of claim 1 further characterized by the step of placing a composition comprising an organic binder precursor material within the drum being the steps of:
(a) placing a first layer of a composition comprising a first solid organic polymeric binder material within the drum adjacent the interior surface of the drum;
(b) placing the fibrous material adjacent the first layer of solid organic polymeric binder material;
(c) placing a second layer of a second composition comprising a second solid organic polymeric binder material within the drum such that the fibrous material is positioned between the first and second compositions;
(d) heating the first and second compositions at conditions sufficient to form first and second organic binder materials in a flowable state; and
(e) allowing the first and the second organic binder materials to cool while continuing to rotate the drum.

17. The method of claim 16 further characterized by the first and second compositions being substantially the same.

18. The method of claim 1 further comprising the step of cutting the flexible, endless, seamless substrate to form at least two flexible, endless, seamless substrates.

19. The method of claim 1 further characterized by the rotating and exposing steps defining the flexible, endless, seamless substrate as having a substantially uniform thickness throughout the substrate width and the substrate length.

20. A method of preparing a flexible, endless, seamless abrasive belt, the method being characterised by the steps of:
(a) inserting a mixture comprising an abrasive agent and an organic binder precursor material within a drum, the drum having an interior peripheral surface;
(b) rotating the drum such that centrifugal forces distribute the mixture uniformly about the interior peripheral surface of the drum to form an exterior layer, the peripheral interior surface defining a belt width and a belt length; (c) inserting a fibrous material adjacent the exterior layer;
(d) providing additional organic binder precursor material in the drum;
(e) rotating the drum such that centrifugal forces distribute the additional organic binder precursor material uniformly about the fibrous material; and
(f) exposing the organic binder precursor material to conditions sufficient to solidify the organic binder precursor materials to form binders such that a flexible, endless, seamless abrasive belt is formed having said fibrous material embedded within the binders.

21. The method of claim 20 and further charcterized by the steps of:
(a) removing the flexible, endless, seamless abrasive belt from the drum; and
(b) dressing the exterior layer to form an abrasive layer.

22. The method of claim 21 and further characterized by the step of coating a supersize layer over the abrasive layer.

23. A method for preparing a flexible, endless, seamless substrate suitable for use as a backing for a coated abrasive, the method characterized by:
(a) inserting a fibrous material and a composition comprising an organic binder precursor adjacent an interior peripheral surface of a drum, the interior peripheral surface defining a substrate width and a substrate length;
(b) rotating the drum such that centrifugal forces distribute the composition about the fibrous material and about the interior peripheral surface of the drum; and
(c) exposing the composition to conditions to sufficiently solidify the organic binder precursor to form a binder such that a flexible, endless, seamless substrate is formed having an outer surface formed adjacent the interior peripheral surface of the drum, an inner surface opposite the outer surface and the fibrous material embedded within the binder.

24. A method for preparing a flexible, endless, seamless substrate suitable for use as a backing for a coated abrasive, the method characterized by:
(a) inserting a composition comprising a fibrous material adjacent an interior peripheral surface of a drum, the interior peripheral surface defining a substrate width and a substrate length;
(b) rotating the drum such that centrifugal forces distribute the fibrous material about the interior peripheral surface of the drum;
(c) while the drum is rotating, pouring a liquid composition comprising an organic binder precursor into the drum such that centrifugal forces distribute the composition about the fibrous material; and
(d) exposing the composition to conditions to sufficiently solidify the organic binder precursor to form a binder such that a flexible, endless, seamless substrate is formed having an outer surface formed adjacent the interior peripheral surface of the drum, an inner surface opposite the outer surface and the fibrous material embedded within the binder.

25. A method for preparing a flexible, endless, seamless coated abrasive belt, the method characterized by:
(a) inserting a composition comprising a fibrous material adjacent an interior surface of a drum, the interior peripheral surface defining a substrate width and a substrate length;
(b) rotating the drum such that centrifugal forces distribute the fibrous material about the interior surface of the drum;
(c) while the drum is rotating, pouring a liquid composition comprising an organic binder precursor into the drum such that centrifugal forces distribute the composition about the fibrous material;
(d) exposing the composition to conditions to solidify the organic binder precursor to form a binder such that a flexible, endless, seamless backing is formed having an outer surface formed adjacent the interior peripheral surface of the drum, an inner surface opposite the outer surface and the fibrous material embedded in the partially hardened binder;
(e) removing the backing from the drum;
(f) slipping the backing over a mandrel;
(g) while rotating the mandrel,
(i) applying a make coating binder precursor to the backing, and
(ii) applying a plurality of abrasive particles to the make coating binder precursor;
(h) exposing the make coating binder precursor to conditions sufficient to at least partially solidify the make coating binder precursor;
(i) while rotating the mandrel, applying a size coating binder precursor over the make coating binder precursor and abrasive particles; and
(j) exposing the make coating binder precursor and the size coating binder precursor to conditions sufficient to substantially solidify the make and the size coating binder precursors to form make and size coatings.

26. The flexible, endless, seamless substrate obtainable by the process according to any one of claims 1, 9, 10, 12-19, 23 and 24 wherein the fibrous material is embedded in the binder.

27. The flexible, endless, seamless abrasive substrate or belt obtainable by the process according to any one of claims 2 to 8, 11, 20-22 and 25 wherein the fibrous material is embedded in the binder.

## Patentansprüche

1. Verfahren zur Herstellung eines biegsamen, endlosen, nahtlosen Substrates, das zur Verwendung als ein Träger für ein beschichtetes Schleifmittel geeignet ist, wobei das Verfahren gekennzeichnet ist durch die Schritte:
(a) Einbringen eines Fasermaterials benachbart einer inneren Umfangsoberfläche einer Trommel, wobei die innere Oberfläche eine Substratbreite und eine Substratlänge definiert;
(b) Anordnen einer Zusammensetzung, die ein organisches Bindemittel-Vorläufermaterial aufweist, innerhalb der Trommel;
(c) Drehen der Trommel, so daß Zentrifugalkräfte die Zusammensetzung über das Fasermaterial und über die innere Umfangsoberfläche der Trommel verteilen; und
(d) Aussetzen der Zusammensetzung Bedingungen, um den organischen Bindemittel-Vorläufer ausreichend zu verfestigen, um ein Bindemittel zu bilden, so daß ein biegsames, endloses, nahtloses Substrat gebildet wird, das eine benachbart der inneren Umfangsoberfläche der Trommel ausgebildete äußere Oberfläche, eine der äußeren Oberfläche gegenüberliegende innere Oberfläche und das in das Bindemittel eingebettete Fasermaterial aufweist.

2. Verfahren nach Anspruch 1, das ferner den Schritt des Bereitstellens einer Schleifbeschichtung auf dem Substrat aufweist.

3. Verfahren nach Anspruch 1, ferner dadurch gekennzeichnet, daß das organische Bindemittel-Vorläufermaterial ein wärmeaushärtendes Kunstharz aufweist und das Verfahren den Schritt des Einbringens eines Schleifmittels in die Trommel, so daß eine Schleifschicht auf der inneren Oberfläche des biegsamen nahtlosen Substrates gebildet wird, aufweist.

4. Verfahren nach Anspruch 3, ferner dadurch gekennzeichnet, daß der Schritt des Einbringens des Schleifmittels das Einbringen eines Schleifminerals in die Trommel, nachdem die Zusammensetzung, die das organische Bindemittel-Vorläufermaterial aufweist, gleichmäßig über das Fasermaterial verteilt worden ist, und bevor das organische Bindemittel-Vorläufermaterial verfestigt ist, aufweist.

5. Verfahren zur Herstellung eines beschichteten Schleifmittels durch das Verfahren nach Anspruch 1, ferner dadurch gekennzeichnet, daß es aufweist: Aufbringen eines Anfertigungs-Beschichtungsbindemittel-Vorläufers auf das Substrat, wobei der Anfertigungs-Beschichtungsvorläufer ein erstes Kunstharz aufweist, Aussetzen des Anfertigungs-Beschichtungsbindemittel-Vorläufers Bedingungen, die ausreichend sind, um eine mindestens teilweise ausgehärtete Anfertigungsbeschichtung zu bilden, Aufbringen von Schleifkörnern auf die teilweise ausgehärtete Anfertigungsbeschichtung, Aufbringen eines Leim-Beschichtungsbindemittel-Vorläufers über die Schleifkörner und die teilweise ausgehärtete Anfertigungsbeschichtung, wobei der Leim-Beschichtungsbindemittel-Vorläufer ein zweites Kunstharz aufweist, und Aussetzen der Anfertigungs- und Leim-Beschichtungsbindemittel-Vorläufer Bedingungen, um ein im wesentlichen vollständig ausgehärtetes erstes Kunstharz und zweites Kunstharz zu bilden.

6. Verfahren nach Anspruch 5, das ferner das Aufbringen einer Superleimbeschichtung über das im wesentlichen vollständig ausgehärtete erste Kunstharz und zweite Kunstharz aufweist.

7. Verfahren zur Herstellung eines beschichteten Schleifmittels durch das Verfahren nach Anspruch 1, ferner dadurch gekennzeichnet, daß es aufweist: Aufbringen eines Anfertigungs-Beschichtungsbindemittel-Vorläufers auf das Substrat, wobei der Anfertigungs-Beschichtungsvorläufer ein erstes Kunstharz aufweist, Aufbringen von Schleifkörnern auf den Anfertigungs-Beschichtungsbindemittel-Vorläufer, Aufbringen eines Leim-Beschichtungsbindemittel-Vorläufers über die Schleifkörner und den Anfertigungs-Beschichtungsbindemittel-Vorläufer, wobei der Leim-Beschichtungsbindemittel-Vorläufer ein zweites Kunstharz aufweist, und Aussetzen der Anfertigungs- und Leim-Beschichtungsbindemittel-Vorläufer Bedingungen, um das erste Kunstharz und das zweite Kunstharz im wesentlichen auszuhärten.

8. Verfahren nach Anspruch 7, das ferner das Aufbringen einer Superleimbeschichtung über das im wesentlichen vollständig ausgehärtete erste Kunstharz und zweite Kunstharz aufweist.

9. Verfahren nach Anspruch 1, ferner dadurch gekennzeichnet, daß das Fasermaterial in einem Gewichtsanteil vorhanden ist, der von etwa 1 bis etwa 60 Gewichtsprozent reicht.

10. Verfahren nach Anspruch 1, ferner dadurch gekennzeichnet, daß das Fasermaterial aus Glasfasern besteht, und der organische Bindemittelvorläufer Isocyanate und aromatische Amine aufweist.

11. Verfahren nach Anspruch 3, ferner gekennzeichnet durch den Schritt des Umdrehens des biegsamen nahtlosen Sübstrates, so daß die Schleifschicht nach außen zeigt.

12. Verfahren nach Anspruch 1, wobei der Schritt des Einbringens der Fasermaterialien gekennzeichnet ist durch die Schritte:
(a) Einbringen mindestens einer Fasermattenstruktur in die Trommel, wobei die Matte aus der Gruppe gewählt wird, die aus nichtgewebten Matten, gewebten Matten und Verbundstoffen aus nichtgewebten Matten und einer Vielzahl von durchgehenden Garnen besteht, wobei die durchgehenden Garne allgemein parallel zur Substratlänge sind; und
(b) Drehen der Trommel, so daß Zentrifugalkräfte die Mattenstruktur an der inneren Oberfläche der Trommel anordnen.

13. Verfahren nach Anspruch 1, ferner dadurch gekennzeichnet, daß der Schritt des Einbringens des Fasermaterials die Schritte aufweist:
(a) Bereitstellen einer Fasermattenstruktur, die zwei Enden und eine Länge aufweist, die doppelt so groß wie ein Innenumfang der Trommel ist, wobei die Matte aus der Gruppe gewählt wird, die aus nichtgewebten Matten, gewebten Matten und Verbundstoffen aus nichtgewebten Matten und einer Vielzahl von durchgehenden Garnen besteht, wobei die durchgehenden Garne allgemein parallel zur Sübstratlänge sind; und
(b) Einbringen der Mattenstruktur in die Trommel in einer gedoppelten Schichtkonfiguration, so daß die beiden Enden der Mattenstruktur benachbart zueinander angeordnet werden.

14. Verfahren nach Anspruch 1, wobei der Schritt des Anordnens einer Zusammensetzung, die ein organisches Bindemittel-Vorläufermaterial aufweist, innerhalb der Trommel durch die Schritte gekennzeichnet ist:
(a) Bereitstellen eines flüssigen organischen Bindemittel-Vorläuferkunstharzes; und
(b) Anordnen des flüssigen organischen Bindemittel-Vorläuferkunstharzes in der Trommel.

15. Verfahren nach Anspruch 14, ferner dadurch gekennzeichnet, daß der Schritt des Anordnens des flüssigen organischen Bindemittel-Vorläufers in der Trommel stattfindet, wenn die Trommel sich dreht.

16. Verfahren nach Anspruch 1, ferner dadurch gekennzeichnet, daß der Schritt des Anordnens einer Zusammensetzung, die ein organisches Bindemittel-Vorläufermaterial aufweist, innerhalb der Trommel aus den Schritten besteht:
(a) Anordnen einer ersten Schicht einer Zusammensetzung, die ein erstes festes organisches Polymerbindemittelmaterial aufweist, innerhalb der Trommel benachbart der inneren Oberfläche der Trommel;
(b) Anordnen des Fasermaterials benachbart der ersten Schicht des festen organischen Polymerbindemittelmaterials;
(c) Anordnen einer zweiten Schicht einer zweiten Zusammensetzung, die ein zweites festes organisches Polymerbindemittelmaterial aufweist, innerhalb der Trommel, so daß das Fasermaterial zwischen den ersten und zweiten Zusammensetzungen angeordnet wird;
(d) Erwärmen der ersten und zweiten Zusammensetzungen bei Bedingungen, die ausreichend sind, um erste und zweite organische Bindemittelmaterialien in einem fließfähigen Zustand zu bilden; und
(e) Abkühlenlassen der ersten und der zweiten organischen Bindemittelmaterialien, während die Trommel weiterhin gedreht wird.

17. Verfahren nach Anspruch 16, ferner dadurch gekennzeichnet, daß die ersten und zweiten Zusammensetzungen im wesentlichen dieselben sind.

18. Verfahren nach Anspruch 1, das ferner den Schritt des Schneidens des biegsamen, endlosen, nahtlosen Substrates aufweist, um mindestens zwei biegsame, endlose, nahtlose Substrate zu bilden.

19. Verfahren nach Anspruch 1, ferner dadurch gekennzeichnet, daß die Dreh- und Aussetz-Schritte das biegsame, endlose, nahtlose Substrat so definieren, daß es eine im wesentlichen gleichmäßige Dicke über die gesamte Substratbreite und die Substratlänge aufweist.

20. Verfahren zur Herstellung eines biegsamen, endlosen, nahtlosen Schleifbandes, wobei das Verfahren durch die Schritte gekennzeichnet ist:
(a) Einbringen einer Mischung, die ein Schleifmittel und ein organisches Bindemittel-Vorläufermaterial aufweist, in eine Trommel, wobei die Trommel eine innere Umfangsoberfläche aufweist;
(b) Drehen der Trommel, so daß Zentrifugalkräfte die Mischung gleichmäßig über die innere Umfangsoberfläche der Trommel verteilen, um eine äußere Schicht zu bilden, wobei die innere Umfangsoberfläche eine Bandbreite und eine Bandlänge definiert;
(c) Einbringen eines Fasermaterials benachbart der äußeren Schicht;
(d) Bereitstellen zusätzlichen organischen Bindemittel-Vorläufermaterials in der Trommel;
(e) Drehen der Trommel, so daß Zentrifugalkräfte das zusätzliche organische Bindemittel-Vorläufermaterial gleichmäßig über das Fasermaterial verteilen; und
(f) Aussetzen des organischen Bindemittel-Vorläufermaterials Bedingungen, die ausreichend sind, um die organischen Bindemittel-Vorläufermaterialien zu verfestigen, um ein Bindemittel zu bilden, so daß ein biegsames, endloses, nahtloses Schleifband gebildet wird, das das in die Bindemittel eingebettete Fasermaterial aufweist.

21. Verfahren nach Anspruch 20, ferner durch die Schritte gekennzeichnet:
(a) Entfernen des biegsamen, endlosen, nahtlosen Schleifbandes aus der Trommel; und
(b) Abrichten der äußere Schicht, um eine Schleifschicht zu bilden.

22. Verfahren nach Anspruch 21 und, ferner gekennzeichnet durch den Schritt des Beschichtens einer Superleimbeschichtung über die Schleifschicht.

23. Verfahren zur Herstellung eines biegsamen, endlosen, nahtlosen Substrates, das zur Verwendung als ein Träger für ein beschichtetes Schleifmittel geeignet ist, wobei das Verfahren gekennzeichnet ist durch:
(a) Einbringen eines Fasermaterials und einer Zusammensetzung, die einen organischen Bindemittel-Vorläufer aufweist, benachbart einer inneren Umfangsoberfläche einer Trommel, wobei die innere Umfangsoberfläche eine Substratbreite und eine Substratlänge definiert;
(b) Drehen der Trommel, so daß Zentrifugalkräfte die Zusammensetzung über das Fasermaterial und über die innere Umfangsoberfläche der Trommel verteilen; und
(c) Aussetzen der Zusammensetzung Bedingungen, um den organischen Bindemittel-Vorläufer ausreichend zu verfestigen, um ein Bindemittel zu bilden, so daß ein biegsames, endloses, nahtloses Substrat gebildet wird, das eine benachbart der inneren Umfangsoberfläche der Trommel ausgebildete äußere Oberfläche, eine der äußeren Oberfläche gegenüberliegende innere Oberfläche und das in das Bindemittel eingebettete Fasermaterial aufweist.

24. Verfahren zur Herstellung eines biegsamen, endlosen, nahtlosen Substrates, das zur Verwendung als ein Träger für ein beschichtetes Schleifmittel geeignet ist, wobei das Verfahren gekennzeichnet ist durch:
(a) Einbringen einer Zusammensetzung, die ein Fasermaterial aufweist, benachbart einer inneren Umfangsoberfläche einer Trommel, wobei die innere Umfangsoberfläche eine Substratbreite und eine Substratlänge definiert;
(b) Drehen der Trommel, so daß Zentrifugalkräfte das Fasermaterial über die innere Umfangsoberfläche der Trommel verteilen;
(c) während sich die Trommel dreht, Gießen einer flüssigen Zusammensetzung, die einen organischen Bindemittel-Vorläufer aufweist, in die Trommel, so daß Zentrifugalkräfte die Zusammensetzung über das Fasermaterial verteilen; und
(d) Aussetzen der Zusammensetzung Bedingungen, um den organischen Bindemittel-Vorläufer ausreichend zu verfestigen, um ein Bindemittel zu bilden, so daß ein biegsames, endloses, nahtloses Substrat gebildet wird, das eine benachbart der inneren Umfangsoberfläche der Trommel ausgebildete äußere Oberfläche, eine der äußeren Oberfläche gegenüberliegende innere Oberfläche und das in das Bindemittel eingebettete Fasermaterial aufweist.

25. Verfahren zur Herstellung eines biegsamen, endlosen, nahtlosen beschichteten Schleifbandes, wobei das Verfahren gekennzeichnet ist durch:
(a) Einbringen einer Zusammensetzung, die ein Fasermaterial aufweist, benachbart einer inneren Oberfläche einer Trommel, wobei die innere Umfangsoberfläche eine Substratbreite und eine Substratlänge definiert;
(b) Drehen der Trommel, so daß Zentrifugalkräfte das Fasermaterial über die innere Oberfläche der Trommel verteilen;
(c) während sich die Trommel dreht, Gießen einer flüssigen Zusammensetzung, die einen organischen Bindemittel-Vorläufer aufweist, in die Trommel, so daß Zentrifugalkräfte die Zusammensetzung über das Fasermaterial verteilen;
(d) Aussetzen der Zusammensetzung Bedingungen, um den organischen Bindemittel-Vorläufer zu verfestigen, um ein Bindemittel zu bilden, so daß ein biegsamer, endloser, nahtloser Träger gebildet wird, der eine benachbart der inneren Umfangsoberfläche der Trommel ausgebildete äußere Oberfläche, eine der äußeren Oberfläche gegenüberliegende innere Oberfläche und das in das teilweise gehärtete Bindemittel eingebettete Fasermaterial aufweist;
(e) Entfernen des Trägers aus der Trommel;
(f) Schieben des Trägers über einen Dorn;
(g) während des Drehens des Dorns,
(i) Aufbringen eines Anfertigungs-Beschichtungsbindemittel-Vorläufers auf den Träger, und
(ii) Aufbringen mehrerer Schleifteilchen auf den Anfertigungs-Beschichtungsbindemittel-Vorläufer;
(h) Aussetzen des Anfertigungs-Beschichtungsbindemittel-Vorläufers Bedingungen, die ausreichend sind, um mindestens teilweise den Anfertigungs-Beschichtungsbindemittel-Vorläufer zu verfestigen;
(i) während des Drehens des Dorns, Aufbringen eines Leim-Beschichtungsbindemittel-Vorläufers über den Anfertigungs-Beschichtungsbindemittel-Vorläufer und die Schleifteilchen; und
(j) Aussetzen des Anfertigungs-Beschichtungsbindemittel-Vorläufers und des Leim-Beschichtungsbindemittel-Vorläufers Bedingungen, die ausreichend sind, um die Anfertigungs- und die Leim-Beschichtungsbindemittel-Vorläufer im wesentlichen zu verfestigen, um Anfertigungs- und Leimbeschichtungen zu bilden.

26. Das durch das Verfahren nach eine der Ansprüche 1, 9, 10, 12-19, 23 und 24 erhältliche biegsame, endlose, nahtlose Substrat, wobei das Fasermaterial in das Bindemittel eingebettet ist.

27. Das durch das Verfahren nach einem der Ansprüche 2 bis 8, 11, 20-22 und 25 erhältliche biegsame, endlose, nahtlose Substrat oder Band, wobei das Fasermaterial in das Bindemittel eingebettet ist.

## Revendications

1. Procédé de préparation d'un substrat sans soudure, souple, sans fin, apte à être utilisé comme support pour un revêtement d'abrasif, le procédé étant caractérisé par les étapes consistant à :
(a) insérer un matériau fibreux contre la surface périphérique intérieure d'un tambour, la surface intérieure définissant une largeur de substrat et une longueur de substrat;
(b) déposer une composition comprenant un matériau précurseur de liant organique à l'intérieur du tambour;
(c) faire tourner le tambour de telle sorte que les forces centrifuges répartissent la composition autour du matériau fibreux et autour de la surface périphérique intérieure du tambour; et
(d) soumettre la composition à des conditions qui solidifient suffisamment le précurseur de liant organique pour former un liant de manière à constituer un substrat sans soudure, souple, sans fin ayant une surface extérieure placée contre la surface périphérique intérieure du tambour, une surface intérieure opposée à la surface extérieure et le matériau fibreux enrobé dans le liant.

2. Procédé selon la revendication 1 comprenant en outre l'étape consistant à déposer un revêtement abrasif sur le substrat.

3. Procédé selon la revendication 1, caractérisé en outre en ce que le matériau précurseur du liant organique comprend une résine thermodurcissable, et en ce que le procédé comprend l'étape consistant à insérer un agent abrasif dans le tambour pour former une couche abrasive sur la surface intérieure du substrat souple sans soudure.

4. Procédé selon la revendication 3, caractérisé en outre en ce que l'étape consistant à insérer l'agent abrasif comprenne l'insertion d'une charge minérale dans le tambour après que la composition comprenant le matériau précurseur du liant organique a été uniformément répartie autour du matériau fibreux et avant la solidification du matériau précurseur du liant organique.

5. Procédé de fabrication d'un revêtement abrasif par le procédé selon la revendication 1, caractérisé en outre en ce qu'il comprend l'application d'un précurseur de revêtement de base, le précurseur de revêtement de base incluant une première résine, l'exposition du précurseur de revêtement de base à des conditions suffisantes pour former un revêtement de base au moins partiellement durci, le dépôt de grains abrasifs sur le revêtement de base partiellement durci, l'application sur les grains abrasifs et le revêtement de base partiellement durci d'un précurseur de liant de revêtement d'encollage, le précurseur de liant de revêtement d'encollage comprenant une seconde résine, et l'exposition des précurseurs de liant de revêtement de base et d'encollage à des conditions permettant l'obtention d'une première résine et d'une seconde résine complètement durcies.

6. Procédé selon la revendication 5 comprenant en outre l'étape d'appliquer un revêtement de surencollage sur la première résine et la seconde résine pratiquement complètement durcies.

7. Procédé de fabrication d'un revêtement abrasif par le procédé selon la revendication 1 caractérisé en outre en ce qu'il comprend l'application d'un précurseur de liant de revêtement de base, le précurseur de revêtement de base incluant une première résine, le dépôt de grains abrasifs sur le précurseur de liant de revêtement de base, l'application sur les grains abrasifs et le précurseur de liant de revêtement de base d'un précurseur de liant de revêtement d'encollage, le précurseur de liant de revêtement d'encollage comprenant une seconde résine, et l'exposition des précurseurs de liant de revêtement de base et d'encollage à des conditions permettant de durcir pratiquement complètement la première résine et la seconde résine.

8. Procédé selon la revendication 7 comprenant en outre l'étape consistant à appliquer un revêtement de surencollage sur la première résine et la seconde résine pratiquement complètement durcies.

9. Procédé selon la revendication 1, caractérisé en outre par la présence du matériau fibreux à un pourcentage en poids dans la gamme d'environ 1 à environ 60 pour cent en poids.

10. Procédé selon la revendication 1, caractérisé en ce que le matériau fibreux est constitué de fibres de verre et en ce que le précurseur de liant organique comprend des isocyanates et des amines aromatiques.

11. Procédé selon la revendication 3, caractérisé en outre par l'étape consistant à inverser le substrat souple, sans fin, de sorte que la couche abrasive soit tournée vers l'extérieur.

12. Procédé selon la revendication 1, dans lequel l'étape d'insertion du matériau fibreux est caractérisée par les étapes consistant à :
(a) insérer au moins une structure de matelas de fibres à l'intérieur du tambour, le matelas étant choisi parmi les matelas non tissés, les matelas tissés, et les composites de matelas non tissés et d'un grand nombre de fils continus, les fils continus étant généralement parallèles à la longueur du substrat; et
(b) faire tourner le tambour de manière à ce que les forces centrifuges positionnent la structure de matelas contre la surface intérieure du tambour.

13. Procédé selon la revendication 1, caractérisé en outre par l'étape d'insertion du matériau fibreux comprenant les étapes consistant à :
(a) déposer une structure de matelas de fibres ayant deux extrémités et une longueur qui a une valeur double de celle d'une circonférence intérieure du tambour, le matelas étant choisi parmi les matelas non tissés, les matelas tissés, et les composites de matelas non tissés et d'un grand nombre de fils continus, les fils continus étant généralement parallèles à la longueur du substrat; et
(b) insérer la structure de matelas à l'intérieur du tambour dans une configuration à double couche, de manière à ce que les deux extrémités de la structure du matelas soient placées en positions adjacentes l'une par rapport à l'autre.

14. Procédé selon la revendication 1, dans lequel l'étape de dépôt d'une composition comprenant un matériau précurseur de liant organique à l'intérieur du tambour est caractérisée par les étapes consistant à :
(a) préparer une résine liquide de précurseur de liant organique; et
(b) déposer la résine liquide de précurseur de liant organique à l'intérieur du tambour.

15. Procédé selon la revendication 14 caractérisé en outre par l'étape consistant à déposer le précurseur de liant organique à l'intérieur du tambour lorsque le tambour est en rotation.

16. Procédé selon la revendication 1, caractérisé en outre en ce que l'étape consistant à déposer une composition comprenant un matériau précurseur de liant organique à l'intérieur du tambour comprend les étapes consistant à :
(a) déposer une première couche d'une composition comprenant un premier matériau de liant polymérique organique solide à l'intérieur du tambour contre la surface intérieure du tambour;
(b) placer le matériau fibreux en position adjacente à la première couche de matériau de liant polymérique organique solide;
(c) dépose une seconde couche d'une seconde composition comprenant un second matériau de liant organique polymérique solide à l'intérieur du tambour, de sorte que le matériau fibreux soit positionné entre la première et la seconde composition.
(d) chauffer la première et la seconde composition dans des conditions suffisantes pour rendre le premier et le second matériau de liant organique aptes à l'écoulement; et
(e) laisser le premier et le second matériau de liant organique refroidir tout en faisant tourner en continu le tambour.

17. Procédé selon la revendication 16, caractérisé en outre en ce que les première et seconde compositions sont pratiquement identiques.

18. Procédé selon la revendication 1, comprenant en outre l'étape consistant à couper le substrat souple, sans fin, sans soudure pour constituer au moins deux substrats souples, sans fin, sans soudure.

19. Procédé selon la revendication 1, caractérisé en outre en ce que les étapes de rotation et d'exposition définissent le substrat souple, sans fin, sans soudure pour qu'il ait une épaisseur substantiellement uniforme partout dans la largeur du substrat et dans la longueur du substrat.

20. Procédé de préparation d'une bande abrasive souple, sans fin, sans soudure, la procédé étant caractérisé par les étapes consistant à :
(a) placer un mélange comprenant un agent abrasif et un matériau précurseur de liant organique à l'intérieur d'un tambour, le tambour ayant une surface intérieure périphérique;
(b) faire tourner le tambour de sorte que les forces centrifuges répartissent le mélange uniformément autour de la surface périphérique intérieure du tambour pour constituer une couche extérieure, la surface intérieur périphérique définissant une largeur de bande et une longueur de bande;
(c) insérer un matériau fibreux contre la couche extérieure;
(d) déposer un matériau précurseur de liant organique supplémentaire dans le tambour;
(e) faire tourner le tambour de sorte que les forces centrifuges répartissent le matériau précurseur de liant organique supplémentaire uniformément autour du matériau fibreux; et
(f) exposer le matériau précurseur de liant organique à des conditions suffisantes pour solidifier les matériaux précurseurs de liant organique pour constituer des liants de manière à former une bande abrasive souple, sans fin, sans soudure qui enrobe le matériau fibreux à l'intérieur des liants.

21. Procédé selon la revendication 20 et caractérisé en outre par les étapes consistant à :
(a) retirer la bande abrasive souple, sans fin, sans soudure du tambour; et
(b) rectifier la couche externe pour former une couche abrasive.

22. Procédé selon la revendication 21 et caractérisé en outre par l'étape consistant à déposer une couche de surencollage sur la couche abrasive.

23. Procédé de préparation d'un substrat abrasif souple, sans fin, sans soudure apte à être utilisé comme support pour un revêtement d'abrasif, le procédé étant caractérisé par les étapes consistant à :
(a) insérer une composition comprenant un précurseur de liant organique et un matériau fibreux contre une surface périphérique intérieure d'un tambour, la surface périphérique intérieure définissant une largeur de substrat et une longueur de substrat;
(b) faire tourner le tambour de telle sorte que les forces centrifuges répartissent la composition autour du matériau fibreux et autour de la surface périphérique intérieure du tambour; et
(d) soumettre la composition à des conditions qui solidifient suffisamment le précurseur de liant organique pour former un liant de manière à constituer un substrat sans soudure, souple, sans fin ayant une surface extérieure placée contre la surface périphérique intérieure du tambour, une surface intérieure opposée à la surface extérieure et le matériau fibreux enrobé dans le liant.

24. Procédé de préparation d'un substrat souple, sans fin, sans soudure apte à être utilisé comme support pour Un revêtement d'abrasif, le procédé étant caractérisé par les étapes consistant à :
(a) insérer une composition comprenant un matériau fibreux contre une surface périphérique intérieure d'un tambour, la surface périphérique intérieure définissant une largeur de substrat et une longueur de substrat;
(b) faire tourner le tambour de telle sorte que les forces centrifuges répartissent le matériau fibreux autour de la surface périphérique intérieure du tambour;
(c) pendant la rotation du tambour, verser une composition liquide comprenant un précurseur de liant organique dans le tambour de sorte que les forces centrifuges répartissent la composition autour du matériau fibreux; et
(d) soumettre la composition à des conditions qui solidifient suffisamment le précurseur de liant organique pour former un liant de manière à constituer un substrat sans soudure, souple, sans fin ayant une surface extérieure placée contre la surface périphérique intérieure du tambour, une surface intérieure opposée à la surface extérieure et le matériau fibreux enrobé dans le liant.

25. Procédé de préparation d'une bande souple, sans fin, sans soudure revêtue d'un abrasif, le procédé étant caractérisé par les étapes consistant à :
(a) insérer une composition comprenant un matériau fibreux contre une surface périphérique intérieure d'un tambour, la surface périphérique intérieure définissant une largeur de substrat et une longueur de substrat;
(b) faire tourner le tambour de telle sorte que les forces centrifuges répartissent le matériau fibreux autour de la surface périphérique intérieure du tambour;
(c) pendant la rotation du tambour, verser une composition liquide comprenant un précurseur de liant organique dans le tambour de sorte que les forces centrifuges répartissent la composition autour du matériau fibreux; et
(d) soumettre la composition à des conditions qui solidifient le précurseur de liant organique pour former un liant de manière à constituer un support sans soudure, souple, sans fin ayant une surface extérieure placée contre la surface périphérique intérieure du tambour, une surface intérieure opposée à la surface extérieure et le matériau fibreux enrobé dans le liant partiellement durci;
(e) retirer le support du tambour;
(f) enrouler le support sur un mandrin;
(g) pendant la rotation du mandrin,
(i) déposer un précurseur de liant de revêtement de base, et
(ii) déposer un grand nombre de particules abrasives sur le produit précurseur de liant de revêtement;
(h) soumettre le produit précurseur de liant de revêtement à des conditions suffisantes pour solidifier au moins partiellement le précurseur de liant de revêtement de base;
(i) pendant la rotation du mandrin, appliquer un précurseur de liant de revêtement d'encollage sur le précurseur de liant de revêtement de base et les particules abrasives; et
(j) soumettre le précurseur de liant de revêtement de base et le précurseur de liant de revêtement d'encollage à des conditions suffisantes pour solidifier pratiquement complètement les précurseurs de liant de revêtement de base et d'encollage pour constituer les revêtements de base et d'encollage.

26. Substrat souple, sans fin, sans soudure qu'on peut obtenir par le procédé selon l'une quelconque des revendications 1, 9, 10, 12 - 19, 23 et 24 dans lequel le matériau fibreux est enrobé dans le liant.

27. Substrat souple, sans fin, sans soudure ou bande qu'on peut obtenir par le procédé selon l'une quelconque des revendications 2 à 8, 11, 20 - 22 et 25 dans lequel le matériau fibreux est enrobé dans le liant.
